# EUROPEAN PATENT SPECIFICATION

(11) **EP 2 543 218 B1**
(45) Date of publication and mention of the grant of the patent: **30.07.2014**
(21) Application number: 11708367.5
(22) Date of filing: 02.03.2011
(51) Int. Cl.: H04W 56/00, H04W 84/04

(54) **SYSTEM AND METHOD FOR TIMING AND FREQUENCY SYNCHRONIZATION BY A FEMTO ACCESS POINT**
SYSTEM UND VERFAHREN ZUR TAKTUNG UND FREQUENZSYNCHRONISATION DURCH EINEN FEMTO-ZUGANGSPUNKT
SYSTÈME ET PROCÉDÉ POUR TEMPORISATION ET SYNCHRONISATION DE FRÉQUENCES PAR UN POINT D'ACCÈS FEMTO

(30) Priority: 01.03.2011 US 201113037598; 02.03.2010 US 309730 P
(43) Date of publication of application: 09.01.2013
(73) Proprietor: Qualcomm Incorporated, San Diego, CA 92121-1714 (US)
(72) Inventor: SOLIMAN, Samir Salib, San Diego California 92121-1714 (US); AWONIYI, Olufunmilola O., San Diego California 92121-1714 (US); CHAKRABORTY, Kaushik, San Diego California 92121-1714 (US)
(74) Representative: Wegner, Hans
(86) International application number: PCT/US2011/026800
(87) International publication number: WO 2011/109466

(56) References cited:
- EP-A2- 1 089 499
- US-A1- 2010 046 494
- MITSUBISHI ELECTRIC: "Dynamic Setup of HNBs for Energy Savings and Interference Reduction", 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165010, [retrieved on 2008-08-13]

## Description

### BACKGROUND

### Field

The present application relates generally to wireless communications, and more specifically to techniques for synchronizing a femto cell to a macro cell in a wireless communication network.

### Background

Wireless communication networks are widely deployed to provide various communication content such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networlcs, Orthogonal FDMA (OFDMA) networks, and Single-Carrier FDMA (SC-FDMA) networks.

In recent years, users have started to replace fixed line broadband communications with mobile broadband communications and have increasingly demanded great voice quality, reliable service, and low prices, especially at their home or office locations. In order to provide indoor services, network operators may deploy different solutions. For networks with moderate traffic, operators may rely on macro cellular base stations to transmit the signal into buildings. However, in areas where building penetration loss is high, it may be difficult to maintain acceptable signal quality, and thus other solutions are desired. New solutions are frequently desired to make the best of the limited radio resources such as space and spectrum. Some of these solutions include intelligent repeaters, remote radio heads, pico cells, and femto cells.

The Femto Forum, a non-profit membership organization focused on standardization and promotion of femto cell solutions, defines femto access points (FAPs), also referred to as femto cell units, to be low-powered wireless access points that operate in licensed spectrum and are controlled by the network operator, can be connected with existing handsets, and use a residential digital subscriber line (DSL) or cable connection for backhaul. In various standards or contexts, a FAP may be referred to as a home node B (HNB), home e-node B (HeNB), access point base station, etc.

In order to keep the expenses low, it is desired for FAPs to require very little for installation and setup. This means that a FAP may be designed to auto-configure itself such that the user only needs to plug in the cables for the internet connection and electricity, and the timing and frequency synchronization of the FAP with the macro cell is talcen care of automatically.

Document US 2010/0046494 A1 relates to systems and methodologies that facilitate synchronizing base stations in a wireless communication environment. A base station can receive a synchronization signal sent via a low reuse channel, which can be shared by a group of base stations. Further, the base station can align a clock associated therewith to the received synchronization signal. Moreover, the base station can coarsely align the clock to a first synchronization signal received upon a first subset of resources of the low reuse channel, and finely align the clock to a second synchronization signal received upon a second subset of resources (e.g., of the low reuse channel, of a separate channel, ...), where the second subset of resources can be reserved for transmission from at least one base station with at least predetermined level of synchronous accuracy.

Document EP 1089 499 A2 teaches that by inputting an enquiry command at a newly subscribing radio terminal, an enquiry packet is transmitted toward piconets at a surrounding area and, in response to this enquiry, an FHS packet is sent back from respective radio terminals in the piconets and , from this FHS packet, a synchronization word representing a system ID of the piconet and ID address of a sending-back side radio terminal are extracted and such synchronization words and ID addresses are sorted for the respective piconets and displayed on an LCD.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with methods for frequency and timing synchronization by a femto access point (FAP). The method may involve establishing an out-of-band (OOB) link with at least one user equipment (UE). The method may involve receiving aiding parameters from the at least one UE via the OOB link. The method may involve extracting frequency and timing information from at least one uplink packet of the at least one UE based at least in part on the aiding parameters. In further related aspects, an electronic device may be configured to execute the above described methodology.

In accordance with one or more embodiments and corresponding disclosure thereof, various aspects are described in connection with a FAP synchronization method that may be performed by a mobile entity, such as a UE. In one embodiment, the method may involve determining whether an OOB link is established with a FAP. The method may involve, in response to determining that the OOB link is established, providing aiding parameters to the FAP via the OOB link. In further related aspects, an electronic device may be configured to execute the above described methodology.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 shows a wireless communication network.
FIG. 2 is a conceptual diagram illustrating an example of a hardware implementation for an apparatus employing a processing system.
FIG. 3 illustrates an exemplary communication system to enable deployment of FAPs within a network environment.
FIGS. 4A-B are a block diagrams illustrating a FAP and a UE according to an aspect of the disclosure.
FIG. 5A is a conceptual diagram illustrating the utilization of interference from UEs by a neighboring FAP according to an aspect of the disclosure.
FIG. 5B shows an embodiment of a system for communicating aiding parameters over an OOB link.
FIG. 6 is a timing diagram illustrating timing relationships between transmissions on the P-CCPCH and AICH channels.
FIG. 7 is a timing diagram illustrating timing relationships between transmissions on the PRACH and AICH channels.
FIG. 8 is a timing diagram illustrating timing relationships between the PRACH, AICH, F-DPCH, and DPCCH transmissions.
FIG. 9 is a timing diagram illustrating a timing relationship at the UE between the F-DPCH and the UL DPCCH transmissions.
FIG. 10 is a conceptual diagram illustrating the generation of a preamble signal.
FIG. 11 is a conceptual diagram illustrating PRACH physical layer processing.
FIG. 12 is a conceptual diagram illustrating UL DPCCH and UL DPDCH physical layer processing.
FIGS. 13A-B are timing diagrams illustrating timing relationships between UL DPCCH, P-CCPCH and DPCH or F-DPCH transmissions.
FIG. 14 is a timing diagram illustrating the determination of the slot timing of the P-CCPCH using the PRACH preamble and PRACH message part in the CELL_FACH state in accordance with an aspect of the disclosure.
FIG. 15 is a timing diagram illustrating the determination of the slot timing of the P-CCPCH using the PRACH message part in the CELL_FACH state in accordance with an aspect of the disclosure.
FIG. 16 is a timing diagram illustrating the determination of the slot timing of the P-CCPCH using the UL DPCCH in the CELL_FACH state in accordance with an aspect of the disclosure.
FIG. 17 is a timing diagram illustrating the determination of the slot and frame timing of the P-CCPCH using the UL DPCCH in the CELL_DCH state in accordance with an aspect of the disclosure.
FIGS. 18A-B are flow charts illustrating a process for determining the slot timing of the P-CCPCH as shown in the timing diagrams of FIGS. 14-17 in accordance with an aspect of the disclosure.
FIG. 19 illustrates an example methodology for frequency and timing synchronization by a FAP.
FIGS. 20A-B illustrate further aspects of the methodology of FIG. 19.
FIG. 21 illustrates an example methodology for FAP synchronization by a mobile entity.
FIGS. 22A-B illustrate further aspects of the methodology of FIG. 21.
FIG. 23 shows an example apparatus for FAP synchronization, in accordance with the methodology of FIGS. 19-20B.
FIG. 24 shows an example apparatus for FAP synchronization, in accordance with the methodology of FIGS. 21-22B.

### DETAILED DESCRIPTION

The word "exemplary" is used herein to mean "serving as an example, instance, or illustration." Any embodiment described herein as "exemplary" is not necessarily to be construed as preferred or advantageous over other embodiments. The techniques described herein may be used for various wireless communication networks such as CDMA, TDMA, FDMA, OFDMA, SC-FDMA and other wireless networks. The terms "network" and "system" are often used interchangeably. A CDMA network may implement a radio technology such as Universal Terrestrial Radio Access (UTRA), cdma2000, etc. UTRA includes Wideband CDMA (WCDMA), Time Division Synchronous CDMA (TD-SCDMA), and other variants of CDMA. cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) and LTE-Advanced (LTE-A), in both FDD and TDD, are new releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, certain aspects of the techniques are described below for LTE, and LTE terminology is used in much of the description below.

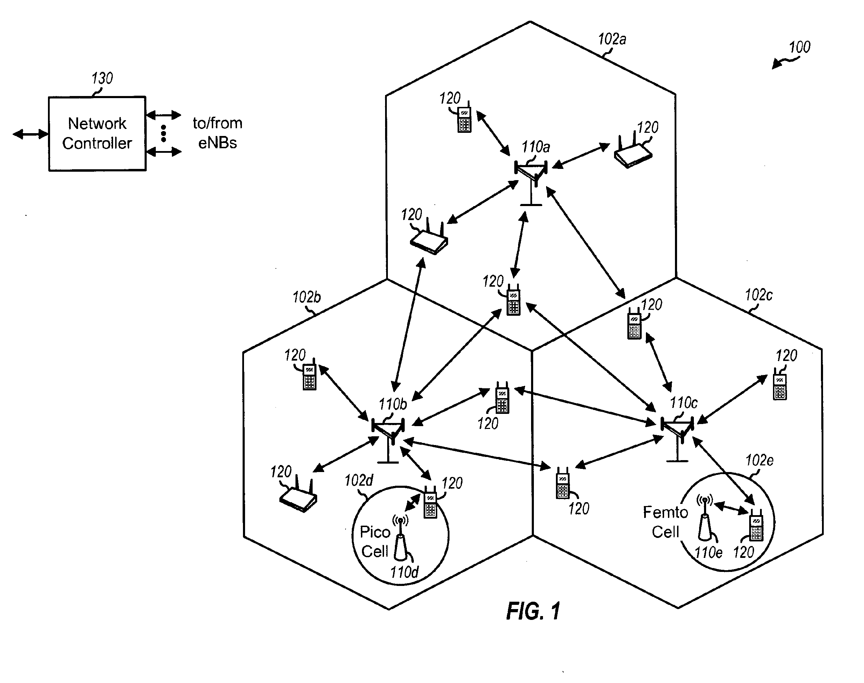

FIG. 1 shows a wireless communication network 100, which may be an LTE network or some other wireless network. Wireless network 100 may include a number of evolved Node Bs (eNBs) 110 and other network entities. An eNB may be an entity that communicates with the UEs and may also be referred to as a base station, a Node B, an access point, etc. Although the eNB typically has more functionalities than a base station, the terms "eNB" and "base station" are used interchangeably herein. Each eNB 110 may provide communication coverage for a particular geographic area and may support communication for mobile entities (MEs), such as, for example, user equipment (UEs) located within the coverage area. To improve network capacity, the overall coverage area of an eNB may be partitioned into multiple (e.g., three) smaller areas. Each smaller area may be served by a respective eNB subsystem. In 3GPP, the term "cell" can refer to the smallest coverage area of an eNB and/or an eNB subsystem serving this coverage area, depending on the context in which the term is used.

An eNB may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a Closed Subscriber Group (CSG)). In the example shown in FIG. 1, eNBs 110a, 110b, and 110c may be macro eNBs for macro cell groups 102a, 102b, and 102c, respectively. Each of the cell groups 102a, 102b, and 102c may include a plurality (e.g., three) of cells or sectors. An eNB 110d may be a pico eNB for a pico cell 102d. An eNB110e may be a femto eNB or femto access point (FAP) for a femto cell 102e.

Wireless network 100 may also include relays (not shown in FIG. 1). A relay may be an entity that can receive a transmission of data from an upstream station (e.g., an eNB or a UE) and send a transmission of the data to a downstream station (e.g., a UE or an eNB). A relay may also be a UE that can relay transmissions for other UEs.

A network controller 130 may couple to a set of eNBs and may provide coordination and control for these eNBs. Network controller 130 may comprise a single network entity or a collection of network entities. Network controller 130 may communicate with the eNBs via a backhaul. The eNBs may also communicate with one another, e.g., directly or indirectly via a wireless or wireline backhaul.

UEs 120 may be dispersed throughout wireless network 100, and each UE may be stationary or mobile. A UE may also be referred to as a mobile station, a terminal, an access terminal, a subscriber unit, a station, etc. A UE may be a cellular phone, a personal digital assistant (PDA), a wireless modem, a wireless communication device, a handheld device, a laptop computer, a cordless phone, a wireless local loop (WLL) station, a smart phone, a netbook, a smartbook, etc. A UE may be able to communicate with eNBs, relays, etc. A UE may also be able to communicate peer-to-peer (P2P) with other UEs.

Wireless network 100 may support operation on a single carrier or multiple carriers for each of the downlink and uplink. A carrier may refer to a range of frequencies used for communication and may be associated with certain characteristics. Operation on multiple carriers may also be referred to as multi-carrier operation or carrier aggregation. A UE may operate on one or more carriers for the downlink (or downlink carriers) and one or more carriers for the uplink (or uplink carriers) for communication with an eNB. The eNB may send data and control information on one or more downlink carriers to the UE. The UE may send data and control information on one or more uplink carriers to the eNB. In one design, the downlink carriers may be paired with the uplink carriers. In this design, control information to support data transmission on a given downlink carrier may be sent on that downlink carrier and an associated uplink carrier. Similarly, control information to support data transmission on a given uplink carrier may be sent on that uplink carrier and an associated downlink carrier. In another design, cross-carrier control may be supported. In this design, control information to support data transmission on a given downlink carrier may be sent on another downlink carrier (e.g., a base carrier) instead of the downlink carrier.

Wireless network 100 may support carrier extension for a given carrier. For carrier extension, different system bandwidths may be supported for different UEs on a carrier. For example, the wireless network may support (i) a first system bandwidth on a downlink carrier for first UEs (e.g., UEs supporting LTE Release 8 or 9 or some other release) and (ii) a second system bandwidth on the downlink carrier for second UEs (e.g., UEs supporting a later LTE release). The second system bandwidth may completely or partially overlap the first system bandwidth. For example, the second system bandwidth may include the first system bandwidth and additional bandwidth at one or both ends of the first system bandwidth. The additional system bandwidth may be used to send data and possibly control information to the second UEs.

Wireless network 100 may support data transmission via single-input single-output (SISO), single-input multiple-output (SIMO), multiple-input single-output (MISO), and/or multiple-input multiple-output (MIMO). For M1M0, a transmitter (e.g., an eNB) may transmit data from multiple transmit antennas to multiple receive antennas at a receiver (e.g., a UE). MIMO may be used to improve reliability (e.g., by transmitting the same data from different antennas) and/or to improve throughput (e.g., by transmitting different data from different antennas).

Wireless network 100 may support single-user MIMO, multi-user MIMO, Coordinated Multi-Point (CoMP), etc. For SU-MIMO, a cell may transmit multiple data streams to a single UE on a given time-frequency resource with or without precoding. For MU-MIMO, a cell may transmit multiple data streams to multiple UEs (e.g., one data stream to each UE) on the same time-frequency resource with or without precoding. CoMP may include cooperative transmission and/or joint processing. For cooperative transmission, multiple cells may transmit one or more data streams to a single UE on a given time-frequency resource such that the data transmission is steered toward the intended UE and/or away from one or more interfered UEs. For joint processing, multiple cells may transmit multiple data streams to multiple UEs (e.g., one data stream to each UE) on the same time-frequency resource with or without precoding.

Wireless network 100 may support hybrid automatic retransmission (HARQ) in order to improve reliability of data transmission. For HARQ, a transmitter (e.g., an eNB) may send a transmission of a data packet (or transport block) and may send one or more additional transmissions, if needed, until the packet is decoded correctly by a receiver (e.g., a UE), or the maximum number of transmissions has been sent, or some other termination condition is encountered. The transmitter may thus send a variable number of transmissions of the packet. For synchronous HARQ, all transmissions of the packet may be sent in subframes of a single HARQ interlace, which may include every Q-th subframes, where Q may be equal to 4, 6, 8, 10, or some other value. For asynchronous HARQ, each transmission of the packet may be sent in any subframe.

Wireless network 100 may support synchronous or asynchronous operation. For synchronous operation, the eNBs may have similar frame timing, and transmissions from different eNBs may be approximately aligned in time. For asynchronous operation, the eNBs may have different frame timing, and transmissions from different eNBs may not be aligned in time.

Wireless network 100 may utilize FDD or TDD. For FDD, the downlink and uplink may be allocated separate frequency channels, and downlink transmissions and uplink transmissions may be sent concurrently on the two frequency channels. For TDD, the downlink and uplink may share the same frequency channel, and downlink and uplink transmissions may be sent on the same frequency channel in different time periods. In related aspects, the FAP synchronization algorithm described in further detail below may be applied to the FAPs using FDD or TDD duplexing.

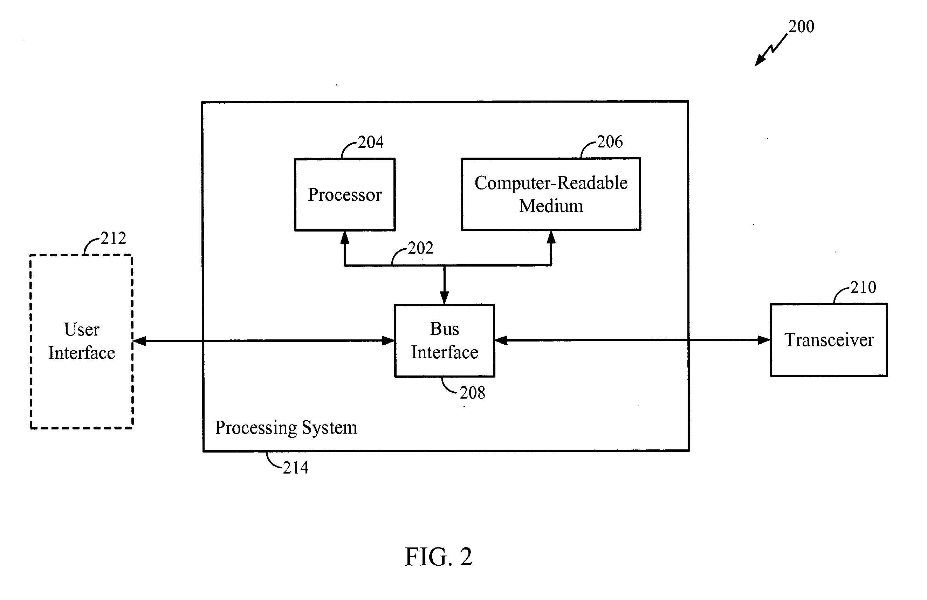

FIG. 2 is a conceptual diagram illustrating an example of a hardware implementation for an apparatus 200 employing a processing system 214. For example, the apparatus 200 may comprise a mobile entity, such as a UE or the like, or a network entity, such as a macro base station (e.g., an eNB), a FAP, or the like. In this example, the processing system 214 may be implemented with a bus architecture, represented generally by the bus 202. The bus 202 may include any number of interconnecting buses and bridges depending on the specific application of the processing system 214 and the overall design constraints. The bus 202 links together various circuits including one or more processors, represented generally by the processor 204, and computer-readable media, represented generally by the computer-readable medium 206. The bus 202 may also link various other circuits such as timing sources, peripherals, voltage regulators, and power management circuits, which are well known in the art, and therefore, will not be described any further. A bus interface 208 provides an interface between the bus 202 and a transceiver 210. The transceiver 210 provides a means for communicating with various other apparatus over a transmission medium. Depending upon the nature of the apparatus, a user interface 212 (e.g., keypad, display, speaker, microphone, and/or joystick) may also be provided.

The processor 204 may be responsible for managing the bus 202 and general processing, including the execution of software stored on the computer-readable medium 206. The software, when executed by the processor 204, causes the processing system 214 to perform the various functions described infra for any particular apparatus. The computer-readable medium 206 may also be used for storing data that is manipulated by the processor 204 when executing software.

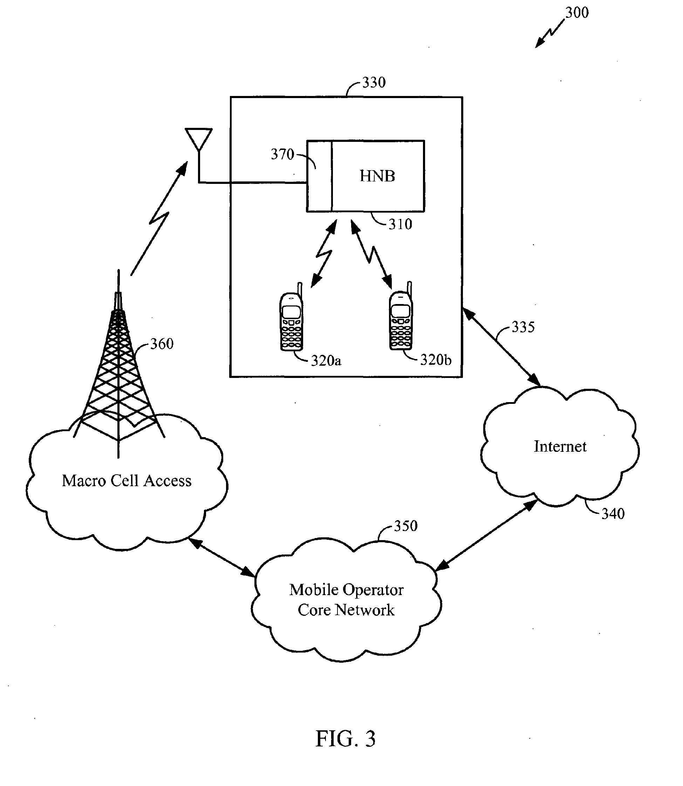

FIG. 3 illustrates an exemplary communication system to enable deployment of femto cells within a network environment. As shown in FIG. 3, the system 300 includes a FAP 310 installed in a corresponding small scale network environment, such as, for example, in one or more user residences 330, and being configured to serve associated, as well as alien, mobile stations 320a and 320b. The FAP 310 may be coupled to the Internet 340 by way of a backhaul connection 335, for example, a cable or digital subscriber line (DSL) connection. The FAP 310 is further communicatively coupled to a mobile operator core network 350 via the Internet 340 utilizing suitable communication hardware and software. Further, the FAP 310 may be communicatively coupled to one or more macro cell base stations 360 utilizing a network listen component 370 for sniffing the air interface broadcasted by one or more of the macro cell base stations 360 and/or for sniffing uplink packets from mobile entities (e.g., UEs).

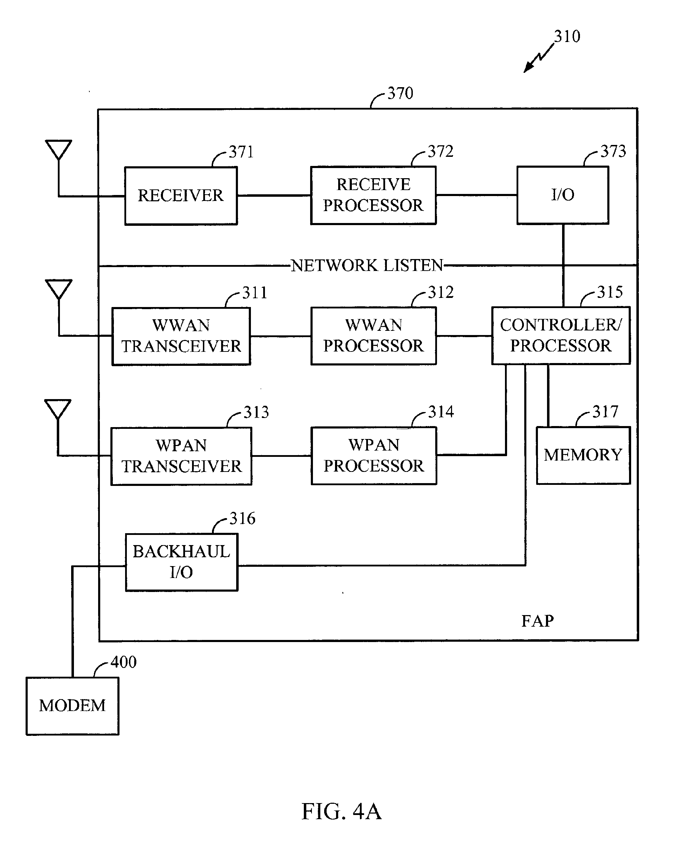

FIG. 4A is a conceptual block diagram that illustrates one example of the FAP 310 shown in FIG. 3. In the figure, a number of blocks are labeled as processors or controllers. Those skilled in the art will comprehend that each of these processors may be implemented as hardware processors such as the processor 204 or the processing system 214 illustrated in FIG. 2, or alternatively, the functions performed by any number of the illustrated processors may be combined into and implemented by a single hardware processor. Further, the illustrated processors in FIG. 4A may represent functions to be implemented by processors, software, or the like.

As noted above, the FAP 310 may include a network listen component 370. The network listen component 370 generally functions like the eyes and ears of the FAP 310 to configure the FAP 310 and retrieve timing and frequency information for synchronization. The network listen component 370 may include a downlink receiver 371 and a receive processor 372 for receiving and measuring signal and interference levels on various available channels. The network listen component 370 may further utilize the receiver 371 and receive processor 372 to acquire timing and frequency information from neighboring cells and decode broadcast messages from those cells for mobility and interference management purposes. For example, the network listen component 370 may achieve this by periodically scanning the surrounding cells. The FAP 310 may further include wireless wide area network (WWAN) components including a WWAN transceiver 311 and WWAN processor 312, and wireless personal area network (WPAN) components including a WPAN transceiver 313 and WPAN processor 314. Here, the WPAN components are optional, and may be utilized for out-of-band (OOB) communication with UEs in proximity to the FAP 310. The FAP 310 may further include a backhaul I/O unit 316 for facilitating communication with a modem 400, which may be internal or external to the FAP 310, a controller/processor 315 for controlling and coordinating the various functionalities of the FAP 310, and a memory 317 for storing information for utilization by the controller/processor 315. In related aspects, the transmission functions of the FAP's WWAN transceiver 311 and WPAN transceiver 313 may be turned off to facilitate operation of the network listen component 370.

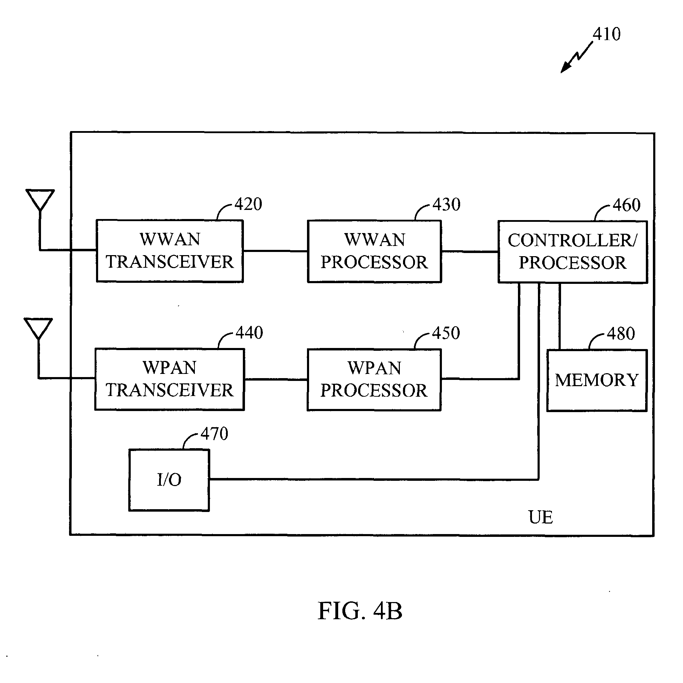

FIG. 4B is a block diagram illustrating an embodiment of a UE 410 according to an exemplary aspect of the disclosure. In FIG. 4B, a number of blocks are labeled as processors or controllers. Those skilled in the art will comprehend that each of these processors may be implemented as hardware processors such as the processor 204 or the processing system 214 illustrated in FIG. 2, or alternatively, the functions performed by any number of the illustrated processors may be combined into and implemented by a single hardware processor. Further, the illustrated processors in FIG. 4B may represent functions to be implemented by processors, software, or the like. Here, the UE 410 may include a WWAN transceiver 420 and WWAN processor 430, as well as a WPAN transceiver 440 and a WPAN processor 450. Accordingly, the UE 410 may be configured to establish a WWAN link and/or a WPAN link with the FAP 310. Further, the UE 410 may include an I/O for accepting user input, for example, from a keypad (not illustrated) and providing output, for example, to a display (not illustrated). Further, the UE 410 may include a controller/processor 460 for controlling the various functions of the UE 410, and a memory 480 for storing information for use by the controller/processor 460.

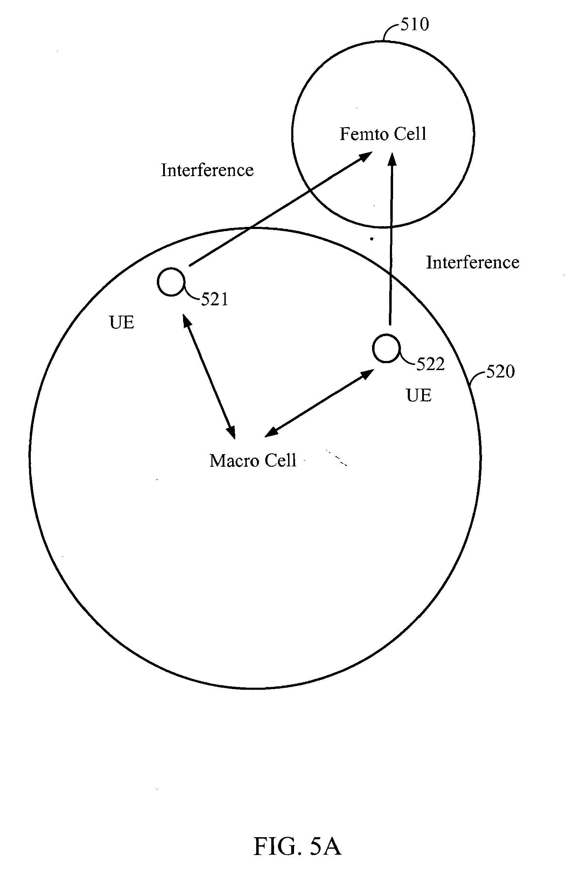

FIG. 5A is a conceptual diagram illustrating an exemplary system in which aspects of the present disclosure may be implemented. Here, a femto cell 510 is located in the general vicinity of a neighboring macro cell 520. To illustrate the example, two UEs 521, 522 are camped on the macro cell 520, which concomitantly acts as their serving cell. The UEs 521, 522 may be configured to receive downlink transmissions in accordance with scheduling resources provided by the macro cell 520, and to send uplink transmissions intended to be received and decoded by the macro cell 520. Since the antennas of the UEs 521 and 522 may not be directional in nature, if the UEs 521, 522 are located proximally to the femto cell 510, the uplink transmissions may be received at the femto cell 510. Ordinarily, uplink transmissions from the UEs 521, 522 would be considered to be undesirable interference from the perspective of the WWAN transceiver and the network listen module of the FAP servicing the femto cell 510. However, in accordance with some aspects of the present disclosure, the femto cell may sniff these uplink transmissions to obtain aiding information, such as to synchronize timing and frequency of the femto cell. In related aspects, as described in further detail below, the aiding information may be obtained by a FAP based as least upon aiding parameters obtained from the UEs 521 and/or 522 via an OOB link (e.g., a Bluetooth link).

In accordance with aspects of the embodiments described herein, a FAP of the femto cell 510 may sniff uplink packets transmitted by UE(s) 521 and/or 522 (e.g., packets directed to the macro cell 520), and may retrieve aiding information, such as, for example, timing and frequency synchronization information of the particular macro cell 520 serving the respective UEs 521 and/or 522. That is, packets transmitted by the UEs 521 and/or 522 directed to neighboring cells, which otherwise are considered as interference by a FAP, may be utilized by the FAP to improve the timing and/or frequency synchronization of the FAP.

In related aspects, the aiding information retrieved by sniffing the uplink transmissions from UEs may be utilized for refining coarse timing estimates obtained by other approaches, for example, utilizing the backhaul I/O module 316, the network listen component 370, or the like, shown in the embodiment of FIG. 3.

In further related aspects, a FAP may sniff packets from UEs that are transmitting packets. In UMTS, UEs that are transmitting packets may be in the CELL_FACH or CELL_DCH mode. In other connected modes, such as the URA_PCH or the CELL_PCH states, the UEs are not transmitting packets on the uplink. Similarly, in idle mode, the UEs are also not transmitting packets on the uplink, and the FAP cannot sniff packets from the UEs in those states.

In order to sniff an uplink packet transmitted by a UE in the CELL_FACH state, the FAP may utilize scrambling code(s), spreading code(s), and signature(s) used by the UE in its uplink transmission(s). For example, the signatures and code numbers may be included in broadcasted system information (e.g., a given system information block (SIB)) in a macro cell, and may be obtained by a network listen entity of the FAP.

That is, to sniff packets from a UE in the CELL_FACH state, the network listen entity of the FAP may obtain broadcasted system information (e.g., SIB-5) from the macro cell. With this information, the FAP may extract signatures (e.g., a signature index), spreading codes (e.g., orthogonal variable spreading factor (OVSF) codes), and scrambling codes for the UEs in CELL_FACH from the broadcasted system information. The FAP may utilize such information to obtain timing and frequency information from uplink packets transmitted by the UE(s).

In order to sniff an uplink packet transmitted by an UE in the CELL_DCH state, the FAP may similarly utilize scrambling code(s), spreading code(s), and timing offset information used by the UE in its uplink transmissions. A FAP in the UE's active set will generally have access to such information, and may utilize this information to sniff the packets and obtain the timing and frequency information.

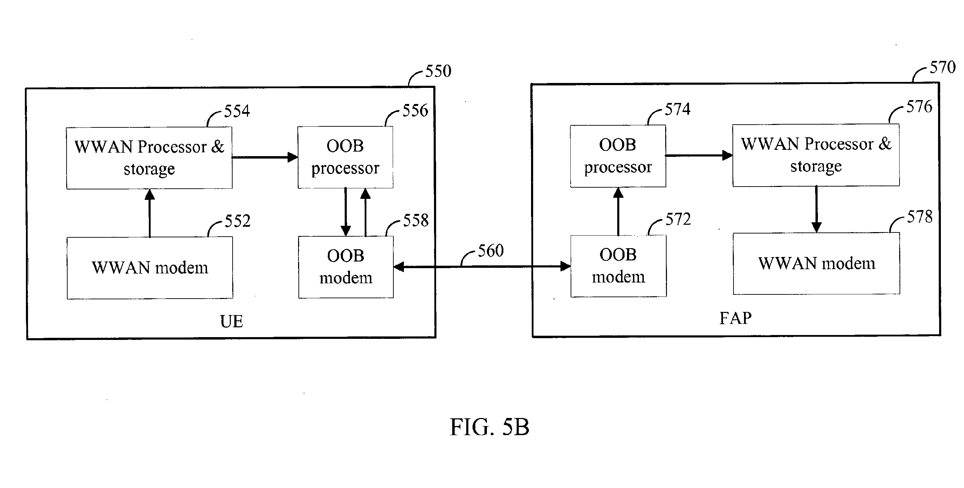

In accordance with aspects of the embodiments described herein, there are provided techniques for parameter communication for OOB-based uplink sniffing. As mentioned above, aiding information for synchronizing the timing and frequency of the FAP may be obtained by the FAP based as least upon aiding parameters obtained via an OOB link with UE(s). With reference to the embodiment of FIG. 5B, there is shown a UE 550 in communication with a FAP 570 via an OOB link 560, which may be a Bluetooth link or the like. The UE 550 may comprise a WWAN modem 552, a WWAN processor and storage 554, an OOB processor 556, and an OOB modem 558 in operative communication with each other. The FAP 570 may comprise an OOB modem 572, an OOB processor 574, a WWAN processor and storage 576, and a WWAN modem 578 in operative communication with each other.

At the UE 550, WWAN aiding parameters may be extracted from the WWAN modem 552 and sent to the WWAN processor and storage 554 to be stored in registers. The WWAN aiding parameters may be read from the registers and passed to the OOB processor 556. The OOB aiding parameters may also optionally be sent to the OOB processor 556 from OOB modem 558. The combined aiding parameters may be sent to the OOB modem 558. The aiding parameters may be then sent over the OOB link 560 to the femto OOB modem 572 of the FAP 570. The aiding parameters may be sent from the femto OOB modem 572 to the OOB processor 574, which in turn may send the aiding parameters to the WWAN processor and storage 576. The femto WWAN modem 578 may be configured to use these aiding parameters in sniffing UE packets (e.g., uplink packets from the UE to a macro base station).

CELL_FACH: In the CELL_FACH state, the UE may be transmitting a preamble to gain access to the channel, or transmitting data to the network. If transmitting a preamble, the UE uses the physical random access channel (PRACH). UEs in the CELL_FACH state, which support Release 7 of the 3GPP family of standards and earlier releases of UMTS, may transmit data only on the PRACH, however, for later releases the UE may use the enhanced uplink dedicated channel dedicated physical control channel (E-DPDCH) for transmitting high data rate uplink messages.

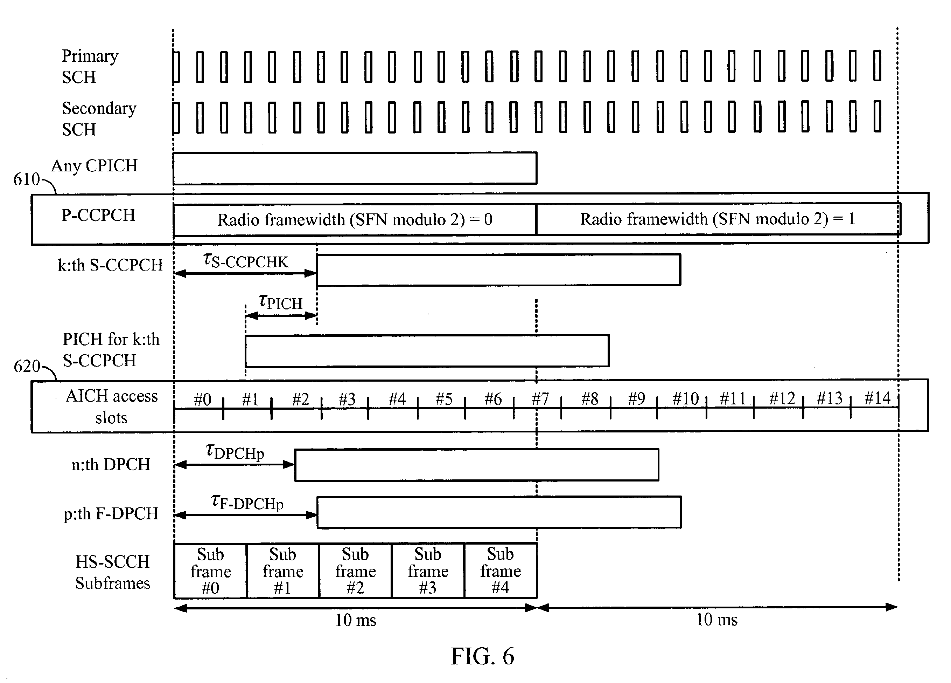

FIG. 6 is a timing diagram that conceptually illustrates some of the channels discussed herein. In UMTS, the primary common control physical channel (P-CCPCH) 610 is the timing reference for all physical channels in a particular cell, directly for the downlink and indirectly for the uplink. Therefore, in order to obtain the timing reference of the macro cell, the timing relationship between the PRACH or the E-DPDCH the UE is using for uplink transmissions and the P-CCPCH of the macro cell is derived. This timing relationship is derived from the acquisition indicator channel (AICH) 620, i.e., the downlink channel carrying the macro cell's ACK/NAK response to preambles. The AICH 620 has 15 slots labeled #0-#14, which overlap two P-CCPCH frames including 30 regular slots. The start of the AICH access slot #0 aligns with the start of P-CCPCH subframe number (SFN) modulo 2 = 0.

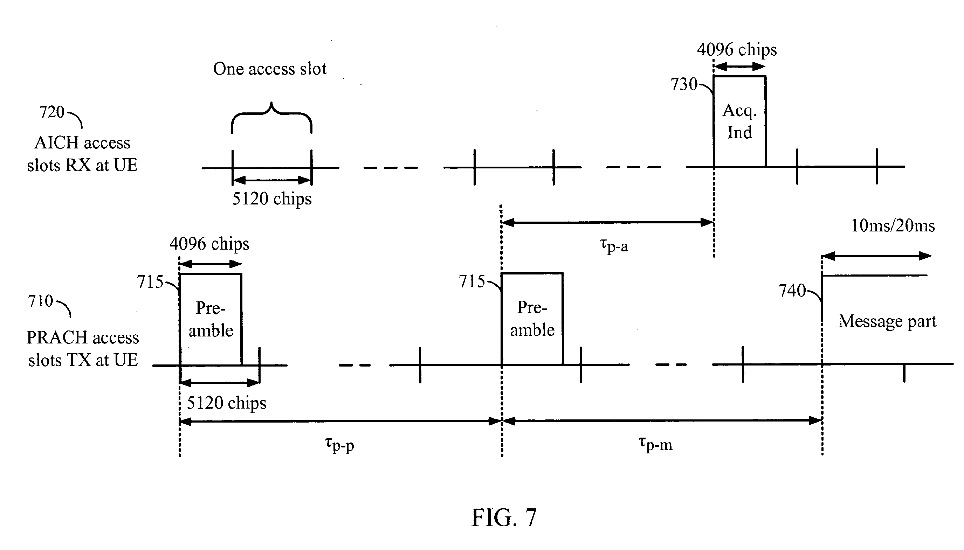

For each preamble transmitted in an uplink access slot there is a corresponding access slot from which the UE expects to receive an ACK/NAK from the network. In the event that an ACK was received, the timing of the UE's uplink data transmission (called the message part) is tied to the PRACH and AICH channel timing as shown in FIG. 6. FIG. 7 shows the PRACH 710, the AICH 720, and the access slot the UE uses for transmission. Here, preambles 715 are 4096 chips long in slots that are 5120 chips wide. The time difference between the transmitted preamble and an expected ACK/NAK on the AICH is depicted as τ*ₚ₋ₐ* in FIG. 7.

If an ACK 730 is received on the AICH channel 720, then a message 740 of length 10 or 20 ms (data) is transmitted with a time difference of τ*ₚ₋ₘ* from when the original preamble was sent. If a NAK is received, then another preamble 715 is transmitted *rₚ₋ₚ* seconds after the previous preamble 715 was sent. The values for *τₚ₋ₚ,* τ*ₚ₋ₘ*, and *τₚ₋ₐ* depend on a parameter called the AICH Transmission Timing (ATT), which may takes on a value of 0 or 1. The value of the ATT parameter is derived from the cell broadcast information and the UE's access service class (ASC). The typical values for *τₚ₋ₚ, τₚ₋ₘ,* and τ*ₚ₋ₐ* are presented in Table 1 below.

**Table 1**

| | **AICH Trans.** | **AICH Trans.** |
|---|---|---|
| | **Timing = 0 (chips)** | **Timing = 1 (chips)** |
| *τ*_{*p-p,* min} | 15360 | 20480 |
| *τₚ₋ₐ* | 7680 | 12800 |
| *τₚ₋ₘ* | 15360 | 20480 |

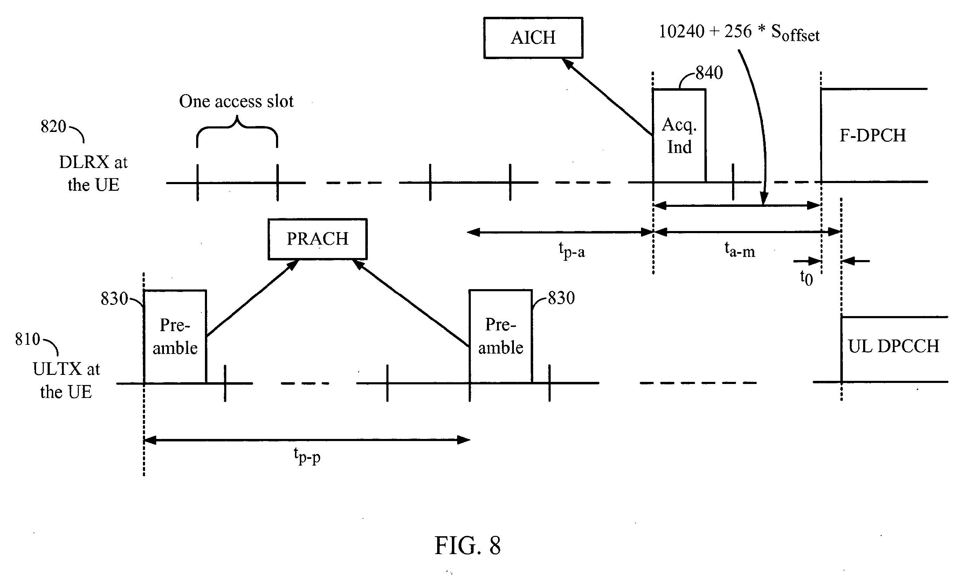

As mentioned above, UEs in the CELL_FACH state supporting Release 8 and beyond are allowed to transmit data with a high data rate on the E-DPDCH, which may be 2ms or 10 ms long. The transmission of E-DPDCH on the uplink 810 relies on the transmission of dedicated physical control channels, i.e., E-DPCCH and UL DPCCH. When UEs transmit on the E-DPDCH, the E-DPDCH and E-DPCCH are frame aligned with UL DPCCH. The UL DPCCH timing is tied to the timing of downlink channels 820 received during the preamble transmission and acknowledgement. These timing relationships are illustrated in FIG. 8. Further, the values of the timing parameters illustrated in FIG. 8 are shown in Table 2 below.

The timing relationship between an UE's preamble transmission 830 on the PRACH and acknowledgement 840 on the AICH is the same as discussed previously, the difference here being when data can be transmitted after the reception of the ACK 840. After an ACK 840 is transmitted on the AICH, the Node B transmits control information to the UE using the fractional dedicated physical channel (F-DPCH). The F-DPCH is transmitted 10240 + 256 × *S*_{offset} chips from the start of the AICH channel. Here, *S*_{offset} is an UE-dependent offset chosen by the network and used in staggering F-DPCH transmissions to multiple UEs so as to prevent overlaps. The range of *S*_{offset} is shown in Table 2.

**Table 2**

| | **AICH Trans.** | **AICH Trans.** |
|---|---|---|
| | **Timing = 0 (chips)** | **Timing = 1 (chips)** |
| τ_{*p-p*, min} | 15360 | 20480 |
| τ*ₚ₋ₐ* | 7680 | 12800 |
| *τₚ₋ₘ* | 15360 | 20480 |
| *τₐ₋ₘ* | 10240 + 256 × S_{offset} + *τ₀* chips | |
| *τ₀* | 1024 | |
| *S_{offset}* | 0, 1,..., 9 | |

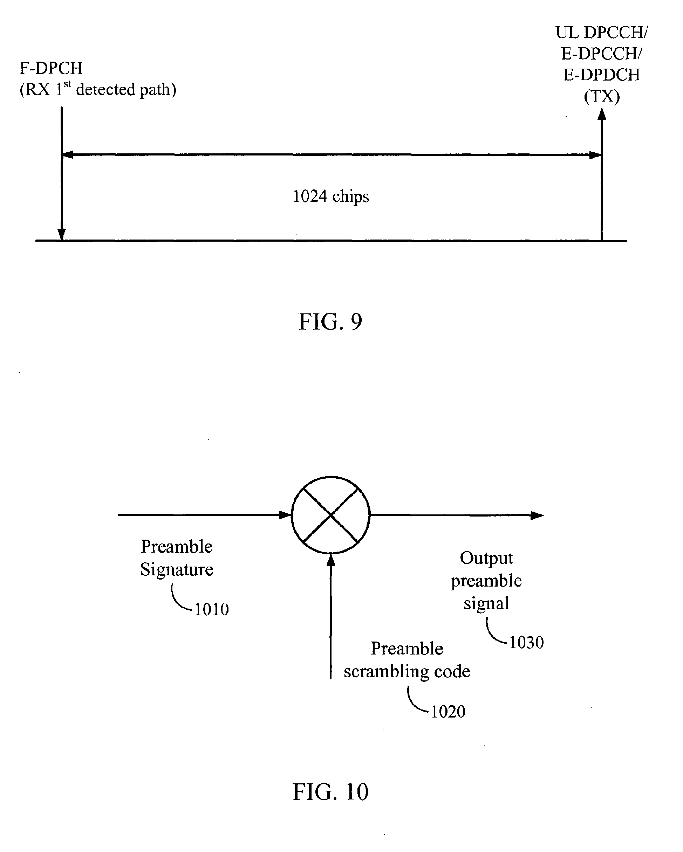

Once the UE receives the F-DPCH, the UE sends its corresponding uplink transmission in the UL DPCCH τ*₀* (1024) chips afterward, as shown in FIG. 9.

While sniffing the UEs' uplink packets in the CELL_FACH state, the network may determine whether the packet is a PRACH preamble, a PRACH message, or UL DPCCH (for release 8 and beyond UEs). The FAP may determine the type of transmission based on the packet structure of each of the transmissions. The PRACH preamble, PRACH message, and UL DPCCH structure are discussed below. In related aspects, the PRACH preambles 1030 are generated by the multiplication of a preamble signature 1010 with a scrambling code sequence 1020 as illustrated in FIG. 10.

For example, there may be sixteen possible preamble signatures available in a particular cell. Each signature is made up of a 16-chip sequence repeated 256 times. While the indices of the available signatures are typically broadcasted in SIB-5, the subset available to a particular UE is derived based on the UE's ASC. In event that the ASC information is not available to the femto sniffing uplink packets, the femto would have to search through all sixteen signatures to find the particular signature that was used by the UE in generating the preamble signal.

The scrambling code used for the PRACH preamble is selected from a group of 8192 sequences divided into 512 code groups with 16 codes per group. Hence, the preamble scrambling code can be expressed as a code with index *n*, where *n* = *m* x 16 + *k*, where *m* is the index identifying the code group with values within the range 0, 1,..., 511 and *k*, and the specific code number within each group value is in the range of 0, 1,..., 15. The code group index has a one-to-one relationship with the primary scrambling code used by the cell (the macro cell in this case). Further information regarding these codes may be found in 3GPP TS25.213 section 4.3.3.2, incorporated herein by reference. The code number *k* is broadcasted in SIB 5.

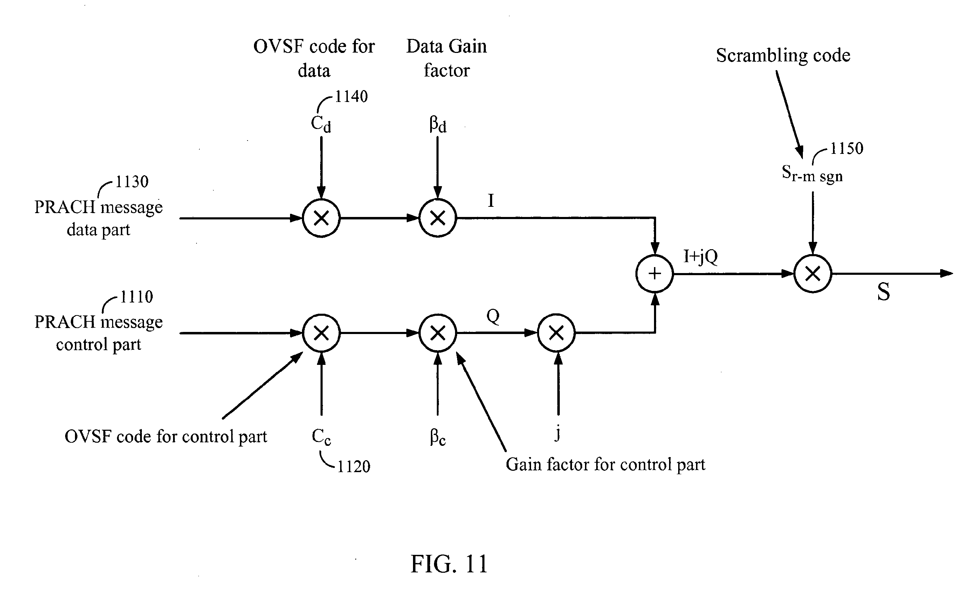

The PRACH message is made of data and control information masked with the OVSF spreading and scrambling codes as shown in FIG. 11.

The control part 1110 carries an 8-bit pilot pattern used for channel estimation at the Node B. There are 14 such patterns defined 3GPP TS25.211 section 5.2.2.1.3, incorporated herein by reference. The pilot pattern used in each slot can vary from slot to slot.

The OVSF code 1120 used for the control part has a fixed spreading factor of 256 given as C_{256,*m*}, were *m* = 16 × *s* + 15, and *s* is the index of the preamble signature, discussed above, which values ranging from 0, 1,...,15. The OVSF code 1140 for the data part 1130 is based on the spreading factor (SF) used for transmission, i.e., 256, 128, 64 and 32. The OVSF code 1140 can be expressed as C_{SF,*m*}, where *m* = SF × *s*/16. Further information about OVSF codes may be found in 3GPP TS25.213, section 4.3.1.3, incorporated herein by reference.

The scrambling code 1150 used for the PRACH message part may have a direct one to one mapping with the scrambling code used in scrambling the PRACH preamble.

Given that the search space for the data part is higher than the data, it is recommended that the OVSF code 1120 for the control part be used in the femto cell search during sniffing. The pilot sequence could also be employed in the search but since the pilot sequence can change every slot, it is therefore not efficient to use the pilot sequences.

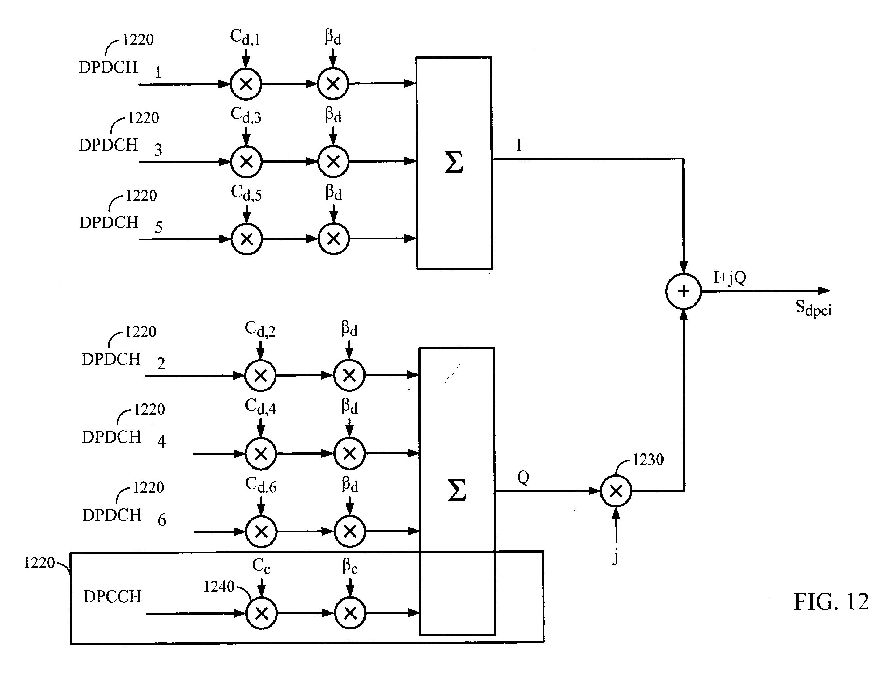

FIG. 12 is a block diagram that illustrates UL DPCCH and UL DPDCH physical layer processing during transmission. It is noteworthy that although the gain factors are applied during transmissions as shown in FIG. 12, the FAP may not be required to know the gain factors during detection.

The UL DPCCH contains control bits such as pilot sequences used for channel estimation and synchronization. There are six possible pilot patterns used in the UL DPCCH. The specific pattern used for transmission is typically signaled to the UE from the network.

The UL DPCCH may be transmitted alone or with other channels such as the E-DPDCH, E-DPCCH, and UL DPDCH. The transmission of UL DPCCH 1210 with the UL DPDCH 1220 is shown in FIG. 12. The UL DPCCH 1210 may be transmitted on the quadrature component 1230 and spread using a known OVSF code 1240 with SF 256 and index 0, *C*_{256,0}. After data scaling with the beta factor and combining with the in-phase component (if transmitted with other channels), the UL DPCCH 1210 is scrambled using a UE specific scrambling code.

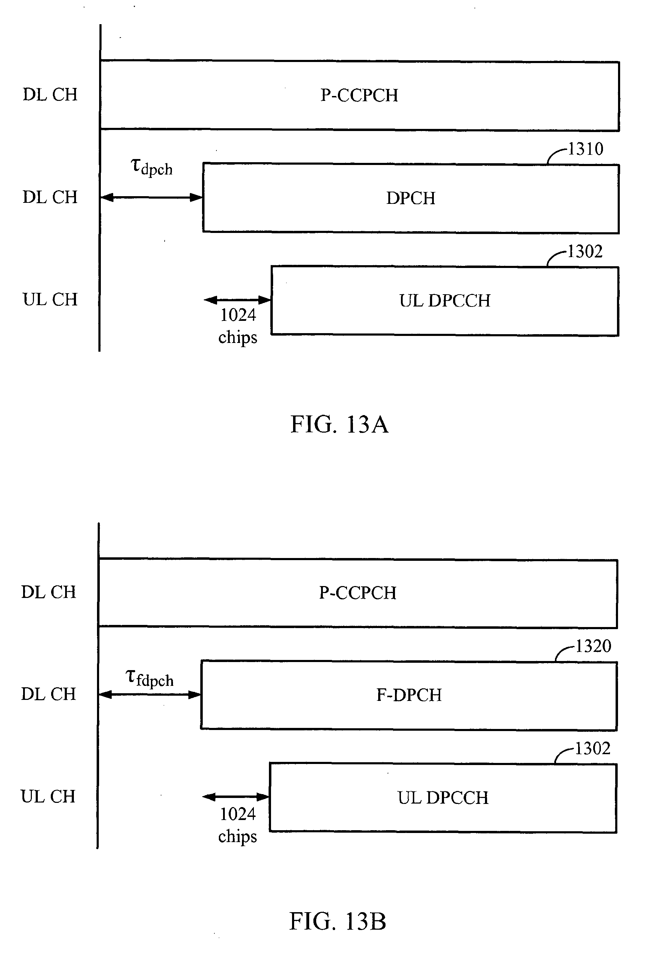

CELL_DCH: In the CELL_DCH state, the UE is actively exchanging data with the network. Similar to the CELL_FACH state described above, the timing reference for uplink transmission is the UL DPCCH 1302. The timing of the UL DPCCH 1302 is derived from the timing of the DPCH 1310 or the F-DPCH 1320 as shown in FIGS. 13A and 13B, respectively. Here, the DPCH 1310 and F-DPCH 1320 have τ_{DPCH} and τ_{F-DPCH} timing offsets from the cell P-CCPCH, respectively. Further, the τ_{DPCH.n} = *Tₙ* × 256 chips, and the τ_{F-DPCH,*p*} = *Tₚ* × 256 chips, where *Tₙ, Tₚ* is in the range {0, 1,..., 149}.

The scrambling code index, beta factors, and τ_{DPCH} and τ_{F-DPCH} offsets corresponding to the UL DPCCH are typically signaled to the UE from the Node B through the Radio Bearer Configuration (RB Config.) or the Radio Bearer Reconfiguration (RB Re-config.) message.

Detection Parameters Used for Sniffing: A FAP may sniff uplink transmissions from UEs to obtain aiding information. The parameters utilized by the FAP for detection of the uplink transmissions, possible values of those parameters, and the sources of those values are presented in Table 3.

**Table 3**

| **Detection Parameter** | **Possible Values** | **UE source of Information** |
|---|---|---|
| UE state | CELL_FACH/CELL_DCH | Signaled to UE in the RRC connection set-up, RB configuration or RB reconfiguration message |
| UE Type | Pre-release 5, Release 5, 6, 7, 8, 9 | Information is internal to UE but communicated to the network during UE capability information exchange |

| **PRACH Detection** | | |
|---|---|---|
| ATT Parameter | 0, 1 | Obtained from SIB 5 / 5 bis |
| ASC Parameter | 0, 1,..., 7 | Determined by UE based information from SIB 5 or 5 bis and USIM information |
| Preamble signature | s =0, 1,..., 15 | Available set is signaled through in SIB 5 / 5 bis but UE randomly selects a sequence |
| Preamble Scrambling code group | 0, 1,..., 511 | Tied to PSC on serving cell signaled. PSC is derived during UE synchronization |
| Preamble code Number | k= 0, 1,..., 15 | Obtained from SIB 5 / 5 bis |
| Pilot bit pattern for the PRACH message control Part | 14 possible bit patterns | Value is signaled from the network to UE |
| OVSF code for the PRACH message control part | C_{256,*m*}, where *m* = 16 × *s* + 15, and s = 0, 1,..., 15 | Depends on the selected preamble signature |
| OVSF codes for the PRACH message data part | C_{SF,*m*} = SF × *s*/16, where s = 0, 1,..., 15, and SF = 32, 64, 128, 256 | SF is chosen by UE based on data rate. |
| | | *s* is based on selected preamble signature |

| **UL DPCCH Detection** | | |
|---|---|---|
| Pilot bit pattern for the UL DPCCH | 6 possible bit patterns | Signaled to UE in the RB configuration or RB reconfiguration message |
| OVSF code for UL DPCCH | One option - *C*_{256,0} | Fixed |
| Scrambling code for UL DPCCH | 2²⁴ options | Signaled to UE in the RB configuration or RB reconfiguration message |
| Time offsets - τ_{DPCH} and τ_{F-DPCH} | *τ*_{DPCH,*n*} = *Tₙ* × 256 chip | Signaled to UE in the RB configuration or RB reconfiguration message |
| | *τ*_{F-DPCH,*p*} = *Tₚ* × 256 | |
| | *Tₙ, Tp* is in the range {0, 1...., 149} | |
| S_{offset} | {0, 1,..., 9} | Value is signaled from the network to UE |

Almost all the parameters presented in Table 3 are provided from the macro cell to the UE in a broadcast or dedicated message, with the exception of the preamble signature, which is randomly selected by the UE. Therefore, the FAP would need to obtain this information from the UE over the OOB link.

If only a subset of the information is available, then the FAP may perform an exhaustive search of the possibilities of the unknown parameters to retrieve the macro cell timing information. Since the search space of the UL DPCCH scrambling code for the UE is very large (i.e., 2²⁴), a system may benefit if the UL DPCCH detection is used when the UL DPCCH scrambling code of the UE is known.

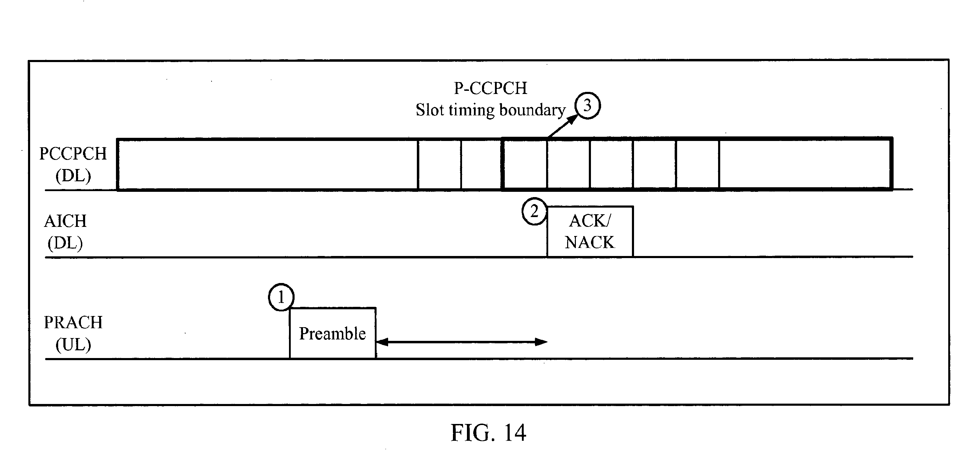

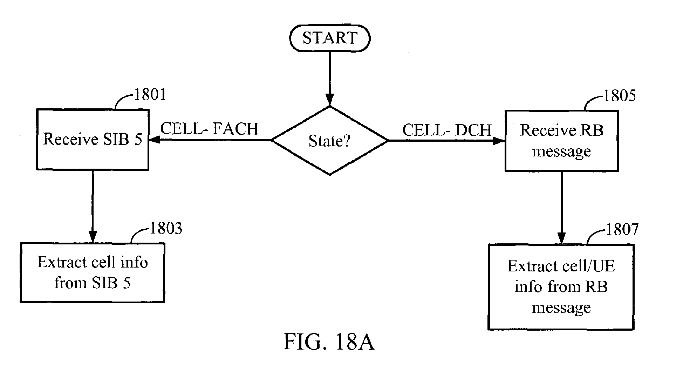

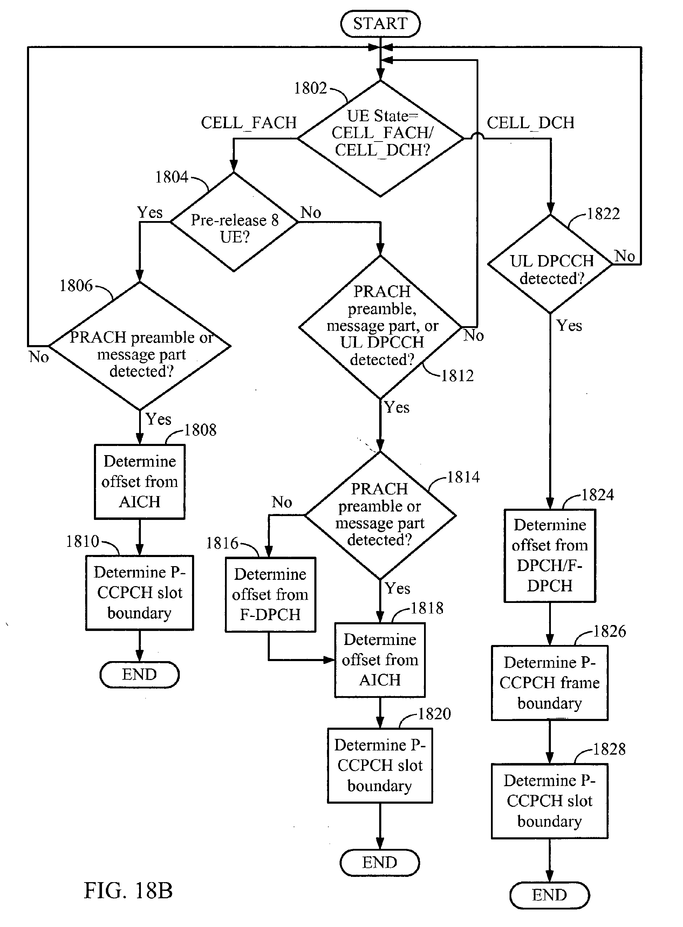

Slot and Frame Timing Determination: The detection of the slot or the frame timing of the P-CCPCH using the PRACH preamble and PRACH message part in CELL_FACH, UL DPCCH in CELL_FACH and UL DPCCH in CELL_DCH are illustrated in FIGS. 14-17. In each figure, the order of the steps used for the determination of the slot timing of the P-CCPCH is also noted. A flow chart illustrating each of these detection processes is presented in FIG. 18B. FIG. 18A illustrates a general process illustrating details of a preliminary procedure prior to the determination of the slot or the frame timing.

In FIG. 18A, the process depends on the state in which the UE exists. If the UE is in the CELL_FACH state, then in block 1801, the process receives detection parameters, for example, utilizing a backhaul connection to retrieve the information from a network node such as a neighboring Node B or an RNC. In block 1803, the process extracts information about the cell from the SIB information retrieved in block 1801, to be utilized for the reception of uplink information from the UE as illustrated in FIG. 18B. If the UE is in the CELL_DCH state, then in block 1805, the process receives detection parameters, for example, utilizing a backhaul connection to retrieve the information from a network node such as a neighboring Node B or an RNC. In block 1807, the process extracts information about the cell and the UE from the radio bearer message retrieved in block 1805, to be utilized for the reception of uplink information from the UE as illustrated in FIG. 18B.

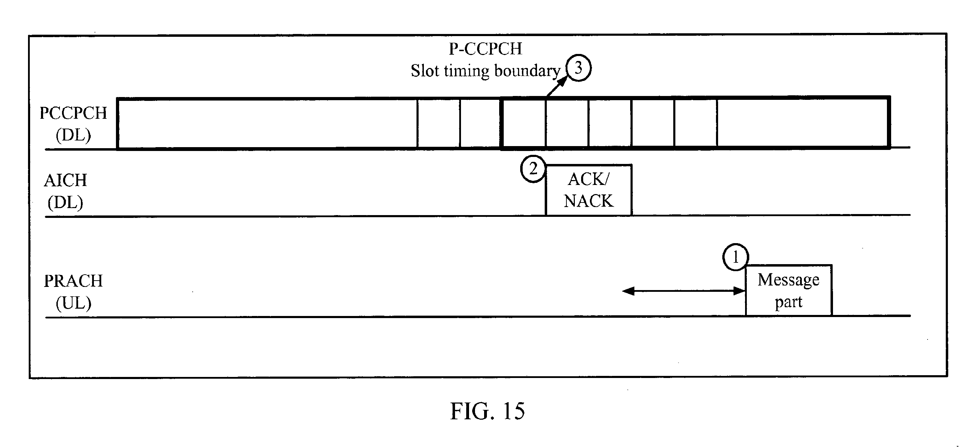

FIG. 14 illustrates the determination of the slot timing of the P-CCPCH using the PRACH preamble in the CELL_FACH state. FIG. 15 illustrates the determination of the slot timing of the P-CCPCH using the PRACH message part in the CELL_FACH state. As shown in FIG. 18B, in block 1802, the process determines whether the cell is in a CELL_FACH state or a CELL_DCH state. If the process determines that the UE state is the CELL_FACH state, then the process branches to block 1804. In block 1804, the process determines whether the UE is a pre-release-8 UE. If the UE is a pre-release-8 UE, the process branches to block 1806. In block 1806, the process determines whether the PRACH preamble or the message part is detected. If the PRACH preamble or message part is not detected, the process returns to the start. If the PRACH preamble or message part is detected, as shown at ① in FIG. 14 or at ① in FIG 15; respectively, then the process branches to block 1808. In block 1808, the process determines the offset from the AICH, which carries the macro cell's ACK/NAK response to preambles, as shown at ② in FIG. 14 for the PRACH preamble and at ② in FIG 15 for the message part. In block 1810, the process determines the P-CCPCH slot boundary, utilizing the relationship between the start of the AICH access slot #0 and the P-CCPCH slots, as shown at ② in FIG. 14 for the PRACH preamble and at ② in FIG 15 for the message part.

As shown in FIG. 18B, in block 1802, if the UE state is determined to be the CELL_FACH state, the process branches to block 1804. In block 1804, if the UE is determined not to be a pre-release-8 UE, the process branches to block 1812. In block 1812, the process determines whether the PRACH preamble, message part, or UL DPCCH are detected. If the PRACH preamble, message part, or UL DPCCH are not detected, the process returns to the start. If the PRACH preamble, message part, or UL DPCCH are detected, the process branches to block 1814. In block 1814, the process determines whether the PRACH preamble or message part are detected. If the PRACH preamble or message part are detected, the process branches to block 1818. In block 1818, the process determines the offset from AICH, which carries the macro cell's ACK/NAK response to preambles, as shown at ② in FIG 14 for the PRACH preamble and at ② in FIG. 15 for the message part. In block 1820, the process determines the P-CCPCH slot boundary, utilizing the relationship between the start of the AICH access slot #0 and the P-CCPCH slots, as shown at ③ in FIG 14 for the PRACH preamble and at ③ in FIG. 15 for the message part.

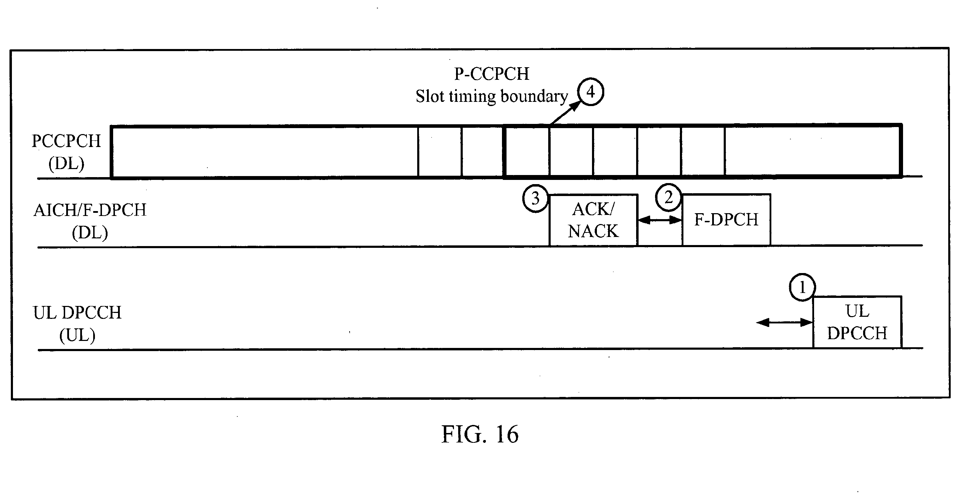

FIG. 16 illustrates the determination of the slot timing of the P-CCPCH using the UL DPCCH in the CELL_FACH state. As shown in FIG. 18B, in block 1802, if the UE state is determined to be the CELL_FACH state, the process branches to block 1804. In block 1804, if the UE is determined not to be a pre-release-8 UE, the process branches to block 1812. In block 1812, the process determines whether the PRACH preamble, message part, or UL DPCCH are detected. If the PRACH preamble, message part, or UL DPCCH are not detected, the process returns to the start. If the PRACH preamble, message part, or UL DPCCH are detected, the process branches to block 1814. In block 1814, the process determines whether the PRACH preamble or message part are detected. If the PRACH preamble and message part are not detected, the process branches to block 1816. In block 1816, the process determines the offset from F-DPCH, utilizing the relationship between UL-DPCCH and the F-DPCH, as shown at ② in FIG. 16. In block 1818, the process determines the offset from AICH, which carries the macro cell's ACK/NAK response to preambles, as shown at ③ in FIG. 16. In block 1820, the process determines the P-CCPCH slot boundary, utilizing the relationship between the start of the AICH access slot #0 and the P-CCPCH slots, as shown at ④ in FIG. 16.

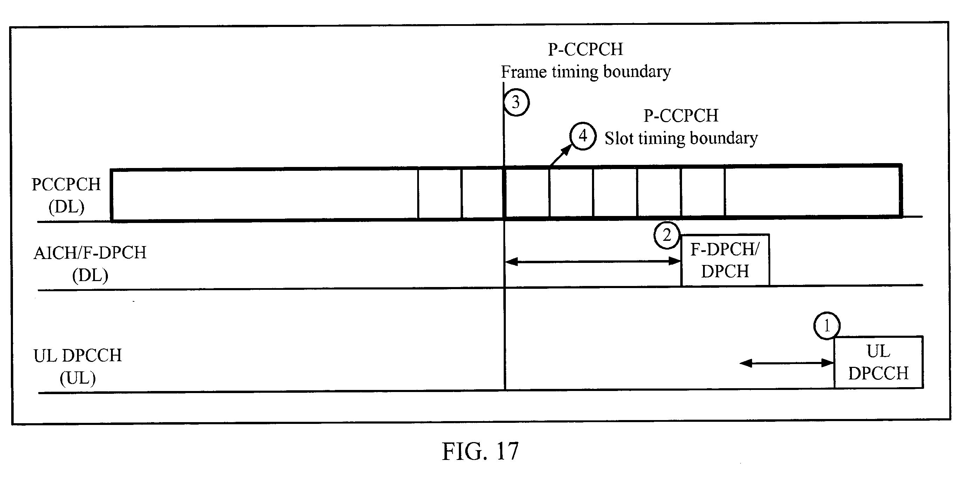

FIG. 17 illustrates the determination of the slot and frame timing of the P-CCPCH using the UL DPCCH in the CELL_DCH state. As shown in FIG. 18, in block 1802, if the UE state is determined to be the CELL_DCH state, the process branches to block 1822. In block 1822, the process determines whether the UL DPCCH is detected, as shown at ①. If UL DPCCH is not detected, the process returns to the start. If the UL DPCCH is detected on the downlink, then in block 1824, as shown at ② in FIG. 17, the process determines the offset of the DPCH 1310 or the F-DPCH 1320 (see FIG. 13A and 13B). In block 1826, the process determines the P-CCPCH frame boundary, as shown at ③ in FIG. 17. In block 1828, the process determines the P-CCPCH slot boundary, as shown at ④ in FIG. 17.

In view of exemplary systems shown and described herein, methodologies that may be implemented in accordance with the disclosed subject matter, will be better appreciated with reference to various flow charts. While, for purposes of simplicity of explanation, methodologies are shown and described as a series of acts/blocks, it is to be understood and appreciated that the claimed subject matter is not limited by the number or order of blocks, as some blocks may occur in different orders and/or at substantially the same time with other blocks from what is depicted and described herein. Moreover, not all illustrated blocks may be required to implement methodologies described herein. It is to be appreciated that functionality associated with blocks may be implemented by software, hardware, a combination thereof or any other suitable means (e.g., device, system, process, or component). Additionally, it should be further appreciated that methodologies disclosed throughout this specification are capable of being stored on an article of manufacture to facilitate transporting and transferring such methodologies to various devices. Those skilled in the art will understand and appreciate that a methodology could alternatively be represented as a series of interrelated states or events, such as in a state diagram.

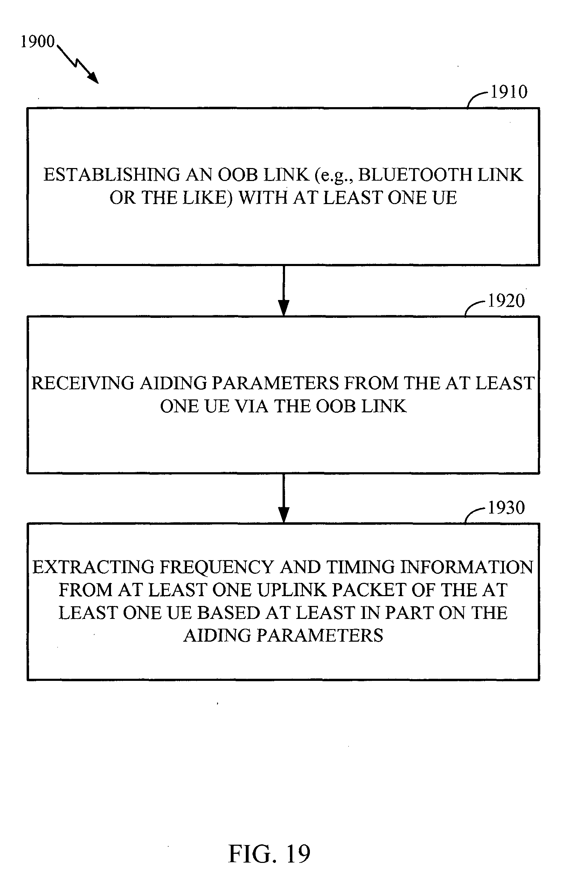

In accordance with one or more aspects of the subject of this disclosure, there are provided methods for frequency and timing synchronization of a FAP. With reference to FIG. 19, illustrated is a methodology 1900 that may be performed by a FAP, or component(s) thereof. The method 1900 may involve, at 1910, establishing an OOB link (e.g,. Bluetooth link or the like) with at least one UE. The method 1900 may involve, at 1920, receiving aiding parameters from the at least one UE via the OOB link. The method 1900 may involve, at 1930, extracting frequency and timing information from at least one uplink packet of the at least one UE based at least in part on the aiding parameters.

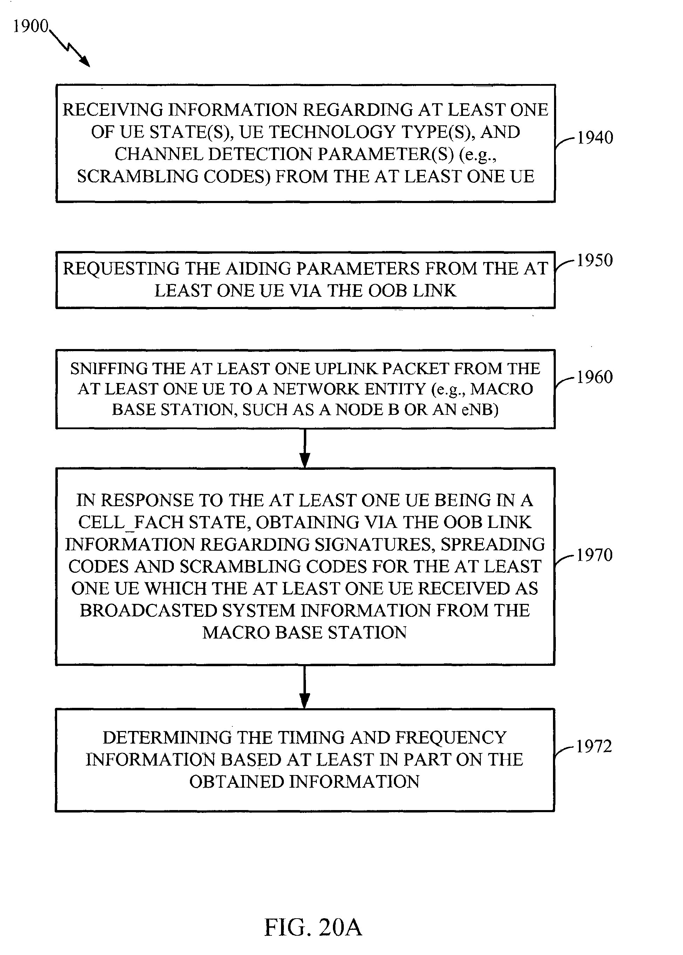

With reference to FIG. 20A, there are shown further operations or aspects of method 1900 that are optional and may be performed by a FAP for frequency and timing synchronization. It is noted that the blocks shown in FIGS. 20A-B are not required to perform the method 1900. If the method 1900 includes at least one block of FIGS. 20A-B, then the method 1900 may terminate after the at least one block, without necessarily having to include any subsequent downstream block(s) that may be illustrated. It is further noted that numbers of the blocks do not imply a particular order in which the blocks may be performed according to the method 1900. For example, receiving the aiding parameters may involve, at 1940, receiving information regarding at least one of UE state(s), UE technology type(s), and channel detection parameter(s) (e.g., scrambling codes) from the at least one UE. In the alternative, or in addition, receiving the aiding parameters may involve, at 1950, requesting the aiding parameters from the at least one UE via the OOB link. Extracting the frequency and timing information may involve, at 1960, sniffing the at least one uplink packet from the at least one UE to a network entity (e.g., Node B or eNB).

In related aspects, extracting the frequency and timing information may involve, at 1970, in response to the at least one UE being in a CELL_FACH state, obtaining via the OOB link information regarding signatures, spreading codes and scrambling codes for the at least one UE which the at least one UE received as broadcasted system information from the macro base station. Extracting may further involve, at 1972, determining the timing and frequency information based at least in part on the obtained information.

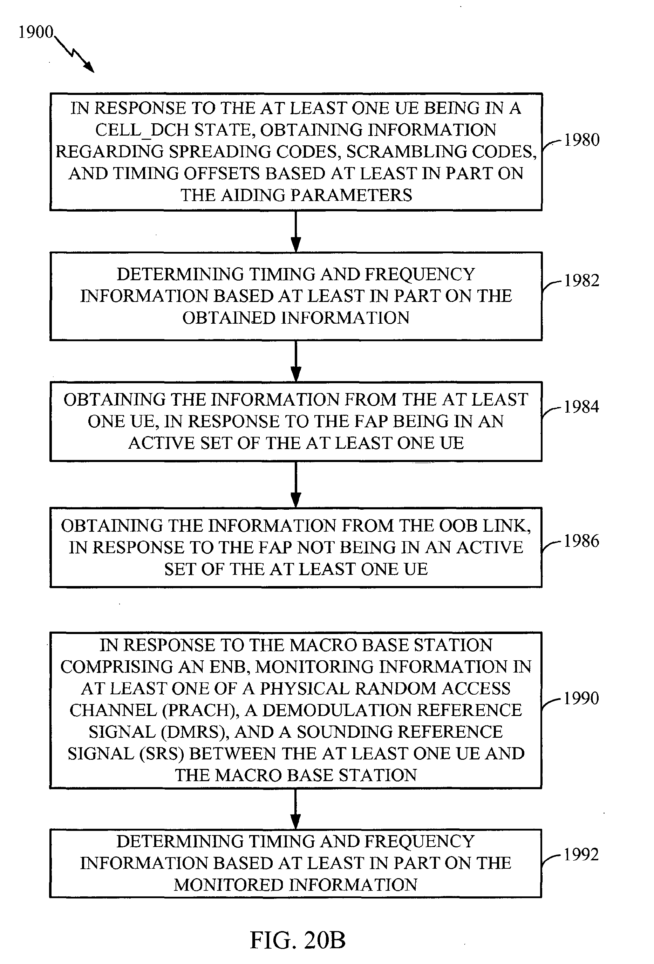

With reference to FIG. 20B, in further related aspects, extracting the frequency and timing information may involve, at 1980, in response to the at least one UE being in a CELL_DCH state, obtaining information regarding spreading codes, scrambling codes, and timing offsets based at least in part on the aiding parameters. Extracting may further involve, at 1982, determining timing and frequency information based at least in part on the obtained information. Obtaining may involve, at 1984, obtaining the information from the at least one UE, in response to the FAP being in an active set of the at least one UE. In the alternative, obtaining may involve, at 1986, obtaining the information from the OOB link, in response to the FAP not being in an active set of the at least one UE.

In yet further related aspects, sniffing may involve, at 1990, in response to the macro base station comprising an eNB and the UE being in a LTE connected mode, monitoring information in at least one of the LTE channels used by a connected mode LTE UE, a physical random access channel (PRACH), a demodulation reference signal (DMRS), and a sounding reference signal (SRS) between the at least one UE and the macro base station. Sniffing may further involve, at 1992, determining timing and frequency information based at least in part on the monitored information.

In related aspects, the PRACH parameters may include: (a) PRACH_Config; (b) PRACH_Mapping; (c) PRACH_PrmbleIndex; (d) PRACH_RBOffset; (e) PRACH_u; (f) PRACH_Ncs; and/or (g) PRACH_PwrOffset. Analogously, the PRACH parameters for LTE uplink signals may include: (a) PRACH configuration index; (b) PRACH mapping patterns (in FDD, it indicates the subframe number where the preamble starts; in TDD, it indicates the index of preamble mapping pattern in time and frequency); (c) preamble indexes (e.g., used to select preamble sequences from 64 preambles available in a given cell); (d) PRACH frequency offset (e.g., the first RB available for PRACH); (e) logical index of root Zadoff-Chu (ZC) sequence (u); (f) cyclic shifts of ZC sequence; and/or (g) the power offset in dB for PRACH.

In further related aspects, the DMRS parameters may include: (a) physical uplink shared channel (PUSCH) parameters; (b) physical uplink control channel (PUCCH) parameters; (c) GroupHop_Enable; and/or (d) SeqHop_Enable. Analogously, the DMRS parameters for LTE uplink signals may include: (a) PUSCH parameters for LTE uplink signals; (b) PUCCH parameters for LTE uplink signals; (c) whether or not to enable group hopping for DMRS on PUCCH and PUSCH; and/or (d) whether or not to enable sequence hopping for DMRS on PUSCH. It is noted that not all PUSCH and PUCCH parameters are required for DMRS. The FAP may try to determine location of DMRS within these channels by using the difference in correlation properties of DMRS patterns versus quadrature phase shift keying (QPSK) patterns.

In yet related aspects, the SRS parameters may include: (a) SRS_BW; (b) SRS_SC_Start; (c) SRS_SF_Config; (d) SRS_CS; and/or (e) SRS_PwrOffset. Analogously, the SRS parameters for LTE uplink signals may include: (a) the SRS bandwidth in RB; (b) the start subcarrier of the SRS; (c) SRS subframe configuration; (d) used in computing the cyclic shift of SRS; and/or (e) the power offset in dB for SRS.

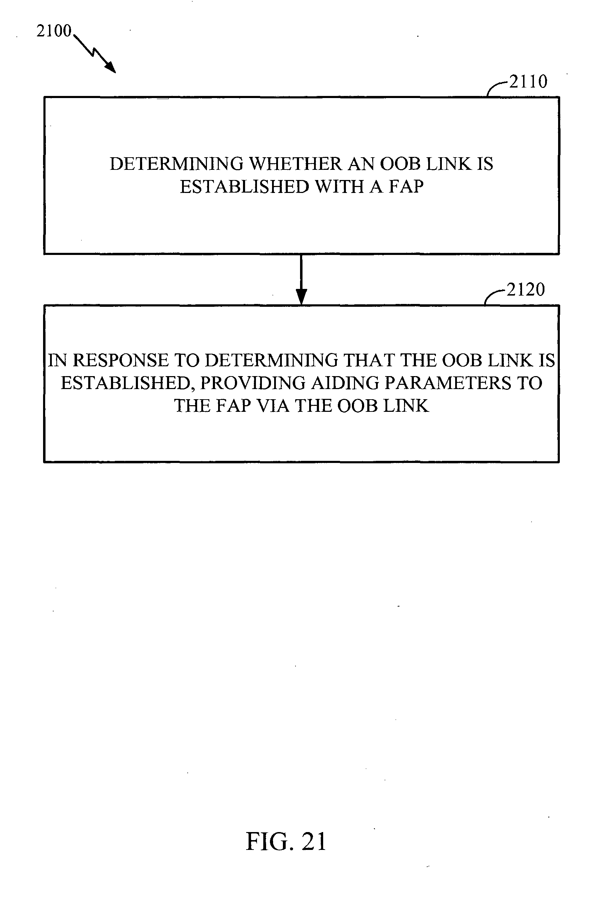

In accordance with one or more aspects of the subject of this disclosure, FIG. 21 illustrates a methodology 2100 for FAP synchronization by a mobile entity (e.g., UE), or component(s) thereof. The method 2100 may involve, at 2110, determining whether an OOB link is established with a FAP. The method 2100 may involve, at 2120, in response to determining that the OOB link is established, providing aiding parameters to the FAP via the OOB link. In related aspects, if the UE determines that the OOB link is not established, the UE may choose to establish that connection by paging the FAP.

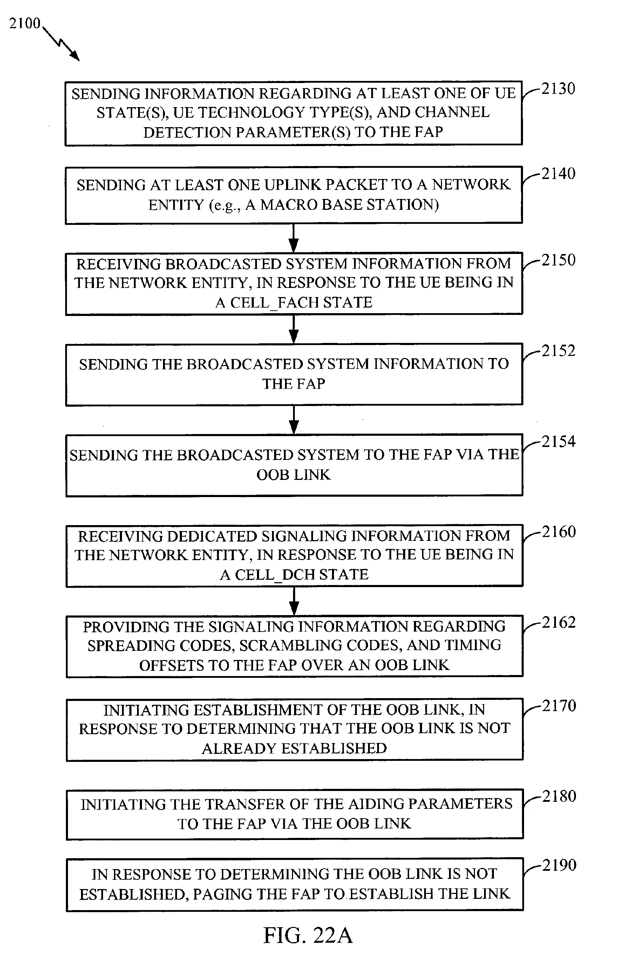

With reference to FIG. 22A, there are shown further operations or aspects of method 2100 that are optional and may be performed by a UE for FAP synchronization. It is noted that the blocks shown in FIGS. 22A-B are not required to perform the method 2100. If the method 2100 includes at least one block of FIGS. 22A-B, then the method 2100 may terminate after the at least one block, without necessarily having to include any subsequent downstream block(s) that may be illustrated. It is further noted that numbers of the blocks do not imply a particular order in which the blocks may be performed according to the method 2100. For example, with reference to FIG. 22A, providing the aiding parameters may involve, at 2130, sending information regarding at least one of UE state(s), UE technology type(s) (e.g., UMTS, LTE, etc.), and channel detection parameter(s) to the FAP. The method 2100 may further involve, at 2140, sending at least one uplink packet to a network entity.

In related aspects, the method 2100 may further involve, at 2150, receiving broadcasted system information from the network entity, in response to the UE being in a CELL_FACH state. The method 2100 may further involve, at 2152, sending the broadcasted system information to the FAP. Sending may involve, at 2154, sending the broadcasted system information to the FAP via the OOB link.

In further related aspects, the method 2100 may further involve, at 2160, receiving dedicated signaling information from the network entity, in response to the UE being in a CELL_DCH state. The method 2100 may further involve, at 2162, providing the signaling information regarding spreading codes, scrambling codes, and timing offsets to the FAP over an OOB link.

In yet further related aspects, the method 2100 may further involve, at 2170, initiating establishment of the OOB link, in response to determining that the OOB link is not already established. Providing may involve, at 2180, initiating the transfer of the aiding parameters to the FAP via the OOB link. In still further related aspects, the method 2100 may involve, at 2190, in response to determining that the OOB link is not established, paging the FAP to establish the OOB link.

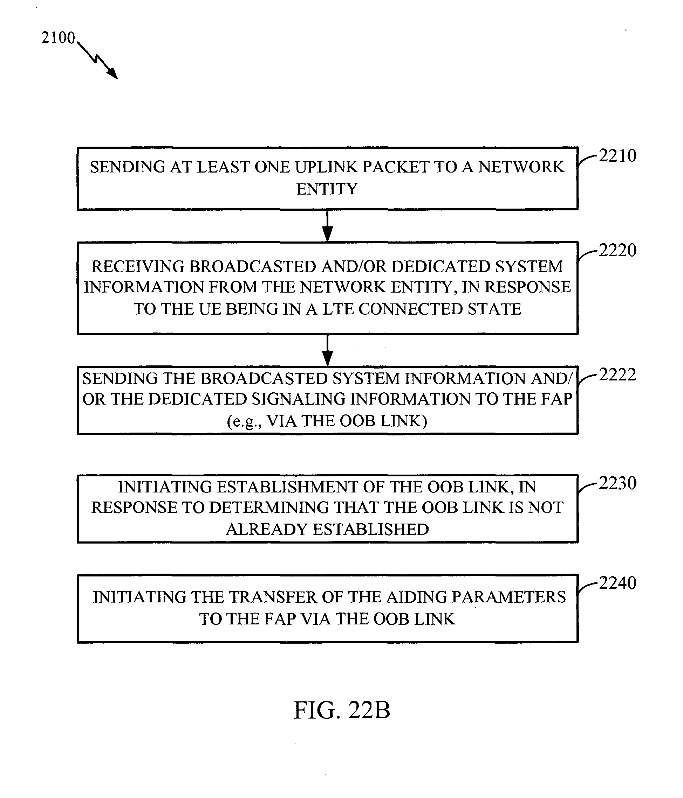

It is noted that the blocks in FIG. 22A are applicable to UMTS or LTE. With reference to FIG. 22B, there are provided blocks that are specific to LTE. For example, the method 2100 may further involve, at 2210, sending at least one uplink packet to a network entity. In related aspects, the method 2100 may further involve, at 2220, receiving broadcasted and/or dedicated system information from the network entity, in response to the UE being in a LTE connected state. The method 2100 may further involve, at 2222, sending the broadcasted system information and/or dedicated signaling information to the FAP. Sending may involve sending the broadcasted system information and/or the dedicated signaling information to the FAP via the OOB link or the like. In further related aspects, the method 2100 may further involve, at 2230, initiating establishment of the OOB link, in response to determining that the OOB link is not already established. Providing may involve, at 2240, initiating the transfer of the aiding parameters to the FAP via the OOB link.

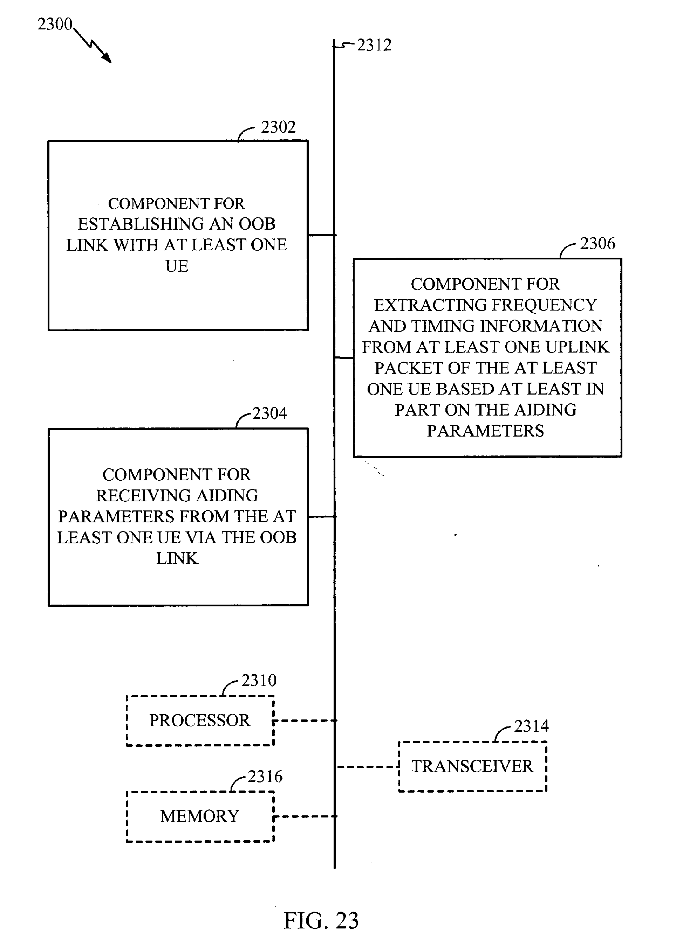

In accordance with one or more aspects of the embodiments described herein, there are provided devices and apparatuses for frequency and timing synchronization of a FAP, as described above with reference to FIGS. 19-20B. With reference to FIG. 23, there is provided an exemplary apparatus 2300 that may be configured as a FAP, or as a processor or similar device for use within the FAP. The apparatus 2300 may include functional blocks that can represent functions implemented by a processor, software, or combination thereof (e.g., firmware).

For example, the apparatus 2300 of FIG. 23 may comprise an electrical component or module 2302 for establishing an OOB link with at least one UE. The apparatus 2300 may comprise an electrical component 2304 for receiving aiding parameters from the at least one UE via the OOB link. The apparatus 2300 may comprise an electrical component 2306 for extracting frequency and timing information from at least one uplink packet of the at least one UE based at least in part on the aiding parameters.

In related aspects, the apparatus 2300 may optionally include a processor component 2310 having at least one processor, in the case of the apparatus 2300 configured as a network entity, rather than as a processor. The processor 2310, in such case, may be in operative communication with the components 2302-2306 via a bus 2312 or similar communication coupling. The processor 2310 may effect initiation and scheduling of the processes or functions performed by electrical components 2302-2306.

In further related aspects, the apparatus 2300 may include a radio transceiver component 2314. A stand alone receiver and/or stand alone transmitter may be used in lieu of or in conjunction with the transceiver 2314. The apparatus 2300 may optionally include a component for storing information, such as, for example, a memory device/component 2316. The computer readable medium or the memory component 2316 may be operatively coupled to the other components of the apparatus 2300 via the bus 2312 or the like. The memory component 2316 may be adapted to store computer readable instructions and data for effecting the processes and behavior of the components 2302-2306, and subcomponents thereof, or the processor 2310, or the methods disclosed herein. The memory component 2316 may retain instructions for executing functions associated with the components 2302-2306. While shown as being external to the processor 2310, the transceiver 2314, and the memory 2316, it is to be understood that one or more of the components 2302-2306 can exist within the processor 2310, the transceiver 2314, and/or the memory 2316.

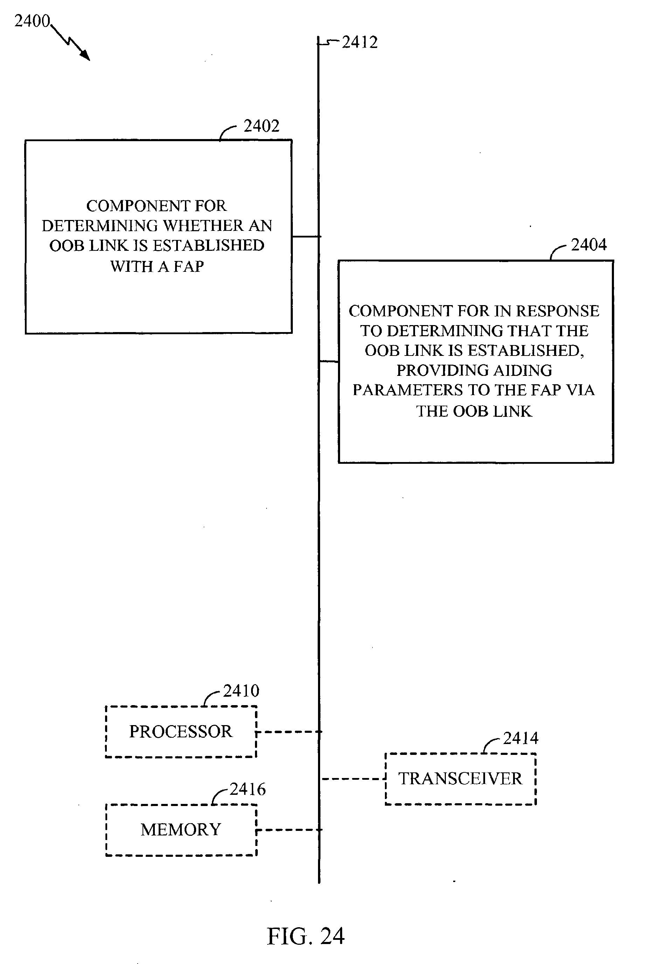

In accordance with one or more aspects of the embodiments described herein, there are provided devices and apparatuses (e.g., mobile entities) configured to facilitate synchronization of a FAP, as described above with reference to FIGS. 21-22B. With reference to FIG. 24, the apparatus 2400 may comprise an electrical component or module 2402 for determining whether an OOB link is established with a FAP. The apparatus 2400 may comprise an electrical component 2404 for, in response to determining that the OOB link is established, providing aiding parameters to the FAP via the OOB link. For the sake of conciseness, the rest of the details regarding apparatus 2400 are not further elaborated on; however, it is to be understood that the remaining features and aspects of the apparatus 2400 are substantially similar to those described above with respect to apparatus 2300 of FIG. 23.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or non-transitory wireless technologies, then the coaxial cable, fiber optic cable, twisted pair, DSL, or the non-transitory wireless technologies are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure.

## Claims

1. A method (1900) for frequency and timing synchronization by a femto access point (FAP), comprising:
establishing (1910) an out-of-band (OOB) link with at least one user equipment (UE);
receiving (1920) aiding parameters from the at least one UE via the OOB link; and
extracting (1930) frequency and timing information from at least one uplink packet of the at least one UE based at least in part on the aiding parameters.

2. The method of Claim 1, wherein receiving the aiding parameters comprises receiving (1940) information regarding at least one of UE state(s), UE technology type(s), and channel detection parameter(s) from the at least one UE.

3. The method of Claim 1, wherein receiving comprises requesting (1950) the aiding parameters from the at least one UE via the OOB link.

4. The method of Claim 1, wherein extracting comprises sniffing (1960) the at least one uplink packet from the at least one UE to a network entity.

5. The method of Claim 4, wherein the network entity comprises a macro base staion, and wherein extracting comprises:
in response to the at least one UE being in a CELL_FACH state, obtaining (1970) via the OOB link information regarding signatures, spreading codes and scrambling codes for the at least one UE which the at least one UE received as broadcasted system information from the macro base station; and
determining (1972) the timing and frequency information based at least in part on the obtained information.

6. The method of Claim 4, wherein the network entity comprises a macro base station, and wherein extracting comprises:
in response to the at least one UE being in a CELL_DCH state, obtaining (1980) information regarding spreading codes, scrambling codes, and timing offsets based at least in part on the aiding parameters; and
determining (1982) timing and frequency information based at least in part on the obtained information.

7. An apparatus, comprising:
means for establishing an out-of-band (OOB) link with at least one user equipment (UE);
means for receiving aiding parameters from the at least one UE via the OOB link; and
means for extracting frequency and timing information from at least one uplink packet of the at least one UE based at least in part on the aiding parameters.

8. A method (2100) for femto access point (FAP) synchronization by a user equipment (UE), comprising:
determining (2110) whether an out-of-band (OOB) link is established with a FAP; and
in response to determining that the OOB link is established, providing (2120) aiding parameters to the FAP via the OOB link.

9. The method of Claim 8, wherein providing the aiding parameters comprises sending (2130) information regarding at least one of UE state(s), UE technology type(s), and channel detection parameter(s) to the FAP.

10. The method of Claim 8, further comprising sending (2140) at least one uplink packet to a network entity.

11. The method of Claim 10, further comprising:
receiving (2150) broadcasted system information from the network entity, in response to the UE being in a CELL_FACH state; and
sending (2152) the broadcasted system information to the FAP.

12. The method of Claim 10, further comprising:
receiving (2160) dedicated signaling information from the network entity, in response to the UE being in a CELL_DCH state; and
providing (2162) the signaling information regarding spreading codes, scrambling codes, and timing offsets to the FAP over an OOB link.

13. The method of Claim 8, further comprising initiating (2170) establishment of the OOB link, in response to determining that the OOB link is not already established.

14. An apparatus, comprising:
means for determining whether an out-of-band (OOB) link is established with a FAP; and
means for providing aiding parameters to the FAP via the OOB link, in response to determining that the OOB link is established.

15. A computer program comprising instructions which cause a computer to perform a method of any one of the claims 1 - 6 or 8 - 13.

## Patentansprüche

1. Verfahren (1900) zur Frequenz- und Timingsynchronisation durch einen Femtozugangspunkt (femto access point, FAP), aufweisend:
Errichten (1910) einer Außerband- (out-of-band, OOB) Verbindung mit zumindest einem Nutzergerät (user equipment, UE);
Empfangen (1920) von Hilfsparametern von dem zumindest einen UE über die OOB-Verbindung; und
Extrahieren (1930) von Frequenz- und Timinginformation aus zumindest einem Uplinkpaket von dem zumindest einen UE, zumindest teilweise basierend auf den Hilfsparametern.

2. Verfahren nach Anspruch 1, wobei das Empfangen der Hilfsparameter ein Empfangen (1940) von Information von dem zumindest einen UE betreffend zumindest eines der Folgenden aufweist: UE-Zustand(Zustände), UE-Technologietyp(en) und ein oder mehrere Kanaldetektionsparameter.

3. Verfahren nach Anspruch 1, wobei das Empfangen ein Anfordern (1950) der Hilfsparameter von dem zumindest einen UE über die OOB-Verbindung aufweist.

4. Verfahren nach Anspruch 1, wobei das Extrahieren ein Sniffing (1960) des zumindest einen Uplinkpakets von dem zumindest einen UE zu einer Netzwerkeinheit aufweist.

5. Verfahren nach Anspruch 4, wobei die Netzwerkeinheit eine Macro-Basisstation aufweist und wobei das Extrahieren aufweist:
In Antwort darauf, dass das zumindest eine UE in einem CELL_FACH Zustand ist, Beziehen (1970) von Information über die OOB-Verbindung, betreffend Signaturen, Spreading-Codes und Scrambling-Codes für das zumindest eine UE, welche das zumindest eine UE als Systeminformation, welche im Broadcast gesendet wurde, von der Macro-Basisstation erhalten hat; und
Ermitteln (1972) der Timing- und Frequenzinformation zumindest teilweise basierend auf der bezogenen Information.

6. Verfahren nach Anspruch 4, wobei die Netzwerkeinheit eine Macro-Basisstation aufweist und wobei das Extrahieren aufweist:
In Antwort darauf, dass das zumindest eine UE in einem CELL_DCH Zustand ist, Beziehen (1980) von Information betreffend Spreading-Codes, Scrambling-Codes und Timingversätzen, zumindest teilweise basierend auf den Hilfsparametern; und
Ermitteln (1982) der Timing- und Frequenzinformation zumindest teilweise basierend auf der bezogenen Information.

7. Vorrichtung, aufweisend:
Mittel zum Errichten einer Außerband- (out-of-band, OOB) Verbindung mit zumindest einem Nutzergerät (user equipment, UE);
Mittel zum Empfangen von Hilfsparametern von dem zumindest einen UE über die OOB-Verbindung; und
Mittel zum Extrahieren von Frequenz- und Timinginformation aus zumindest einem Uplinkpaket von dem zumindest einen UE, zumindest teilweise basierend auf den Hilfsparametern.

8. Verfahren (2100) zur Femto-Zugangspunkt- (femto access point, FAP) Synchronisation durch ein Nutzergerät (user equipment, UE), aufweisend:
Ermitteln (2110), ob eine Außerband- (out-of-band, OOB) Verbindung mit einem FAP errichtet ist; und
In Antwort auf ein Ermitteln, dass die OOB-Verbindung errichtet ist, Liefern (2120) von Hilfsparametern an den FAP über die OOB-Verbindung.

9. Verfahren nach Anspruch 8, wobei das Liefern der Hilfsparameter ein Übermitteln (2130) von Information betreffend zumindest eines der Folgenden an den FAP aufweist: UE-Zustand(Zustände), UE-Technologietyp(en) und ein oder mehrere Kanaldetektionsparameter.

10. Verfahren nach Anspruch 8, weiter aufweisend ein Übermitteln (2140) von zumindest einem Uplinkpaket an eine Netzwerkeinheit.

11. Verfahren nach Anspruch 10, weiter aufweisend:
Empfangen (2150) von Systeminformation, welche im Broadcast gesendet wurde, von der Netzwerkeinheit, in Antwort darauf, dass das UE in einem CELL_FACH Zustand ist; und
Übermitteln (2152) der Systeminformation, welche im Broadcast gesendet wurde, an den FAP.

12. Verfahren nach Anspruch 10, weiter aufweisend:
Empfangen (2160) von dezidierter Signalisierungsinformation von der Netzwerkeinheit, in Antwort darauf, dass das UE in einem CELL_DCH Zustand ist; und
Liefern (2162) der Signalisierungsinformation betreffend Spreading-Codes, Scrambling-Codes und Timmingversätze an den FAP über eine OOB-Verbindung.

13. Verfahren nach Anspruch 8, weiter aufweisend ein Initiieren (2170) eines Errichtens der OOB-Verbindung, in Antwort auf ein Ermitteln, dass die OOB-Verbindung nicht bereits errichtet ist.

14. Vorrichtung, aufweisend:
Mittel zum Ermitteln, ob eine Außerband- (out-of-band, OOB) Verbindung mit einem FAP errichtet ist; und
Mittel zum Liefern von Hilfsparametern an den FAP über die OOB-Verbindung in Antwort auf ein Ermitteln, dass die OOB-Verbindung errichtet ist.

15. Computerprogramm, welches Instruktionen aufweist, die einen Computer veranlassen, ein Verfahren nach irgendeinem der Ansprüche 1 - 6 oder 8-13 auszuführen.

## Revendications

1. Un procédé (1900) de synchronisation de la fréquence et du séquencement par un point d'accès femto (FAP), comprenant :
l'établissement (1910) d'une liaison hors-bande (OOB) avec au moins un équipement utilisateur (UE) ;
la réception (1920) de paramètres d'assistance provenant d'au moins un UE via la liaison OOB ; et
l'extraction (1930) d'informations de fréquence et de séquencement à partir d'au moins un paquet de liaison montante de l'au moins un UE au moins en partie en fonction des paramètres d'assistance.

2. Le procédé de la revendication 1, dans lequel la réception des paramètres d'assistance comprend la réception (1940) d'informations contenant au moins l'un d'entre : état(s) de l'UE, type(s) de technologie de l'UE, et paramètre(s) de détection de canal en provenance de l'au moins un UE.

3. Le procédé de la revendication 1, dans lequel la réception comprend la requête (1950) des paramètres d'assistance en provenance de l'au moins un UE via la liaison OOB.

4. Le procédé de la revendication 1, dans lequel l'extraction comprend l'interception (1960) de l'au moins un paquet de liaison montante depuis l'au moins un UE vers une entité de réseau.

5. Le procédé de la revendication 4, dans lequel l'entité de réseau comprend une station de base macro, et dans lequel l'extraction comprend :
en réponse au fait que l'au moins un UE est dans un état CELL_FACH, l'obtention (1970) via les informations de liaison OOB concernant des signatures, des codes d'étalement et des codes de brouillage pour l'au moins un UE que le au moins un UE a reçu en tant qu'informations système multidiffusées en provenance de la station de base macro ; et
la détermination (1972) des informations de séquencement et de fréquence au moins en partie en fonction des informations obtenues.

6. Le procédé de la revendication 4, dans lequel l'entité de réseau comprend une station de base macro, et dans lequel l'extraction comprend :
en réponse au fait que l'au moins un UE est dans un état CELL_DCH, l'obtention (1980) d'informations concernant des codes d'étalement, des codes de brouillage et des décalages de séquencement au moins en partie en fonction des paramètres d'assistance ; et
la détermination (1982) d'informations de séquencement et de fréquence au moins en partie en fonction des informations obtenues.

7. Un dispositif, comprenant :
des moyens d'établissement d'une liaison hors-bande (OOB) avec au moins un équipement utilisateur (UE) ;
des moyens de réception de paramètres d'assistance provenant d'au moins un UE via la liaison OOB ; et
des moyens d'extraction d'informations de fréquence et de séquencement à partir d'au moins un paquet de liaison montante de l'au moins un UE au moins en partie en fonction des paramètres d'assistance.

8. Un procédé (2100) de synchronisation d'un point d'accès femto (FAP) par un équipement utilisateur (UE), comprenant :
la détermination (2110) si une liaison hors-bande (OOB) est ou non établie avec un FAP ; et
en réponse à la détermination que la liaison OOB est établie, la délivrance (2120) de paramètres d'assistance au FAP via la liaison OOB.

9. Le procédé de la revendication 8, dans lequel la délivrance des paramètres d'assistance comprend l'envoi (2130) d'informations concernant au moins l'un d'entre : état(s) de l'UE, type(s) de technologie de l'UE, et paramètre(s) de détection de canal pour le FAP.

10. Le procédé de la revendication 8, comprenant en outre l'envoi (2140) d'au moins un paquet de liaison montante vers une entité de réseau.

11. Le procédé de la revendication 10, comprenant en outre :
la réception (2150) d'informations système multidiffusées en provenance de l'entité de réseau, en réponse au fait que l'UE est dans un état CELL_FACH ; et
l'envoi (2152) des informations système multidiffusées au FAP.

12. Le procédé de la revendication 10, comprenant en outre :
la réception (2160) d'informations de signalisation dédiées en provenance de l'entité de réseau, en réponse au fait que l'UE est dans un état CELL_DCH ; et
la délivrance (2162) des informations de signalisation concernant des codes d'étalement, des codes de brouillage et des décalages de séquencement au FAP via une liaison OOB.

13. Le procédé de la revendication 8, comprenant en outre l'initiation (2170) de l'établissement de la liaison OOB, en réponse à la détermination que la liaison OOB n'est pas déjà établie.

14. Un dispositif comprenant :
des moyens de détermination si une liaison hors-bande (OOB) est établie avec un FAP ; et
des moyens pour délivrer des paramètres d'assistance au FAP via la liaison OOB, en réponse à la détermination que la liaison OOB est établie.

15. Un programme informatique comprenant des instructions qui font en sorte qu'un calculateur mette en oeuvre un procédé selon l'une des revendications 1 à 6 ou 8 à 13.
